# EUROPÄISCHE PATENTSCHRIFT

(11) **EP 2 697 535 B1**
(45) Veröffentlichungstag und Bekanntmachung des Hinweises auf die Patenterteilung: **02.03.2016**
(21) Anmeldenummer: 12709561.0
(22) Anmeldetag: 12.03.2012
(51) Int. Cl.: F16F 15/16, F16F 15/131

(54) **DREHSCHWINGUNGSDÄMPFUNGSANORDNUNG, INSBESONDERE FÜR EINEN ANTRIEBSSTRANG EINES FAHRZEUGS**
ROTATIONAL-OSCILLATION-DAMPING ARRANGEMENT, IN PARTICULAR FOR A DRIVE TRAIN OF A VEHICLE
ENSEMBLE D'AMORTISSEMENT DES VIBRATIONS TORSIONNELLES, EN PARTICULIER POUR UNE CHAÎNE CINÉMATIQUE D'UN VÉHICULE

(30) Priorität: 11.04.2011 DE 102011007116
(43) Veröffentlichungstag der Anmeldung: 19.02.2014
(73) Patentinhaber: ZF Friedrichshafen AG, 88038 Friedrichshafen (DE)
(72) Erfinder: WEIGAND, Thomas, 97421 Schweinfurt (DE); LORENZ, Daniel, 97688 Bad Kissingen (DE); CARLSON, Cora, 97456 Dittelbrunn (DE)
(86) Internationale Anmeldenummer: PCT/EP2012/054191
(87) Internationale Veröffentlichungsnummer: WO 2012/139827

(56) Entgegenhaltungen:
- DE-A1- 19 700 851
- DE-A1- 19 819 824
- DE-A1- 19 830 521

## Beschreibung

Die vorliegende Erfindung betrifft eine Drehschwingungsdämpfungsanordnung, insbesondere für einen Antriebsstrang, umfassend einen Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten.

Bei derartigen Drehschwingungsdämpfungsanordnungen wird das zwischen dem Eingangsbereich und dem Ausgangsbereich zu übertragende Drehmoment auf die beiden Drehmomentübertragungswege aufgeteilt, wobei die aufgeteilten Drehmomentenanteile, welche über die beiden Drehmomentübertragungswege übertragen werden, in der Kopplungsanordnung einander wieder überlagert, also zusammengeführt werden. Da in zumindest einem der Drehmomentübertragungswege eine Phasenschieberanordnung vorgesehen ist, erfährt der über diesen Drehmomentübertragungsweg geleitete Drehmomentenanteil, insbesondere darin enthaltene Drehungleichförmigkeiten bzw. Drehschwingungen, eine Phasenverschiebung bezüglich des im anderen Drehmomentübertragungsweg übertragenen Drehmomentenanteils bzw. der darin enthaltenen Drehungleichförmigkeiten bzw. Drehschwingungen. Durch die in der Kopplungsanordnung auftretende Überlagerung der beiden Drehmomentenanteile findet damit auch eine Überlagerung der zueinander phasenverschobenen Drehungleichförmigkeiten bzw. Drehschwingungen statt, mit der Folge, dass im Idealfalle eine nahezu vollständige Auslöschung der Schwingungsanteile durch destruktive Überlagerung erfolgt.

Die Qualität dieser Überlagerung bzw. der Phasenverschiebung, welche im Idealfalle maximal 180° betragen kann, hängt im Wesentlichen auch von den bei der Drehmomentübertragung bzw. auch der Überlagerung der Drehmomentenanteile auftretenden Reibeffekten ab.

Die DE 197 00 851 A1 bezieht sich auf einen Torsionsschwingungsdämpfer, während sich die DE 198 19 824 A1 auf einen Torsionsschwingungsdämpfer mit einer Dämpfungseinrichtung und die DE 198 30 521 A1 auf einen Torsionsschwingungsdämpfer mit einer Axiallagerung beziehen.

Es ist die Aufgabe der vorliegenden Erfindung, eine Drehschwingungsdämpfungsanordnung, insbesondere für einen Antriebsstrang eines Fahrzeugs, bereitzustellen, welche bei Aufteilung des zu übertragenden Drehmoments auf mehrere Drehmomentübertragungswege und Überlagerung der Drehmomentenanteile in einer Kopplungsanordnung ein verbessertes Schwingungsdämpfungsverhalten aufweist.

Erfindungsgemäß wird diese Aufgabe gelöst durch eine Drehschwingungsdämpfungsanordnung, insbesondere für einen Antriebsstrang, umfassend einen Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, ferner umfassend eine Dichtungsanordnung zur im Wesentlichen schmiermitteldichten Kapselung wenigstens der Kopplungsanordnung.

Da bei dem erfindungsgemäßen Aufbau bei einer Schwingungsdämpfungsanordnung dafür gesorgt ist, dass durch die Dichtungsanordnung insbesondere die Kopplungsanordnung gegen den Austritt von Schmiermittel gekapselt wird, wird es möglich, auch bzw. insbesondere die Kopplungsanordnung mit Schmiermittel, also einem viskosen Medium, wie z. B. Fett, Öl oder dergleichen, zu schmieren. Dadurch lassen sich die in der Kopplungsanordnung auftretenden Reibungsverluste, welche auch die Qualität der Phasenverschiebung beeinträchtigen können, erheblich reduzieren. Die Folge davon ist, dass die bei den überlagerten Drehmomentenanteilen enthaltenen Drehungleichförmigkeiten bzw. Drehschwingungen einander verbessert im Sinne einer gegenseitigen Auslöschung überlagern.

Um in baulich einfacher Weise die Phasenverschiebung erreichen zu können, wird vorgeschlagen, dass die Phasenschieberanordnung ein Schwingungssystem mit einer Primärseite und einer gegen die Wirkung einer Federanordnung bezüglich der Primärseite um eine Drehachse drehbaren Sekundärseite umfasst. Ein derartiges Schwingungssystem weist eine Eigenfrequenz auf. Erfolgt die Schwingungsanregung mit einer Anregungsfrequenz unter der Eigenfrequenz, so arbeitet das Schwingungssystem unterkritisch mit der Folge, dass Anregung und Reaktion, also Bewegung der Primärseite und der Sekundärseite, gleichphasig laufen. Wird jedoch die Resonanzfrequenz überschritten, so geht das System in einen überkritischen Zustand über, in welchem eine Phasenverschiebung zwischen der Anregung und der Reaktion auftritt, welche dann bei dem erfindungsgemäßen Aufbau dazu genutzt wird, eine entsprechende Phasenverschiebung der über das Schwingungssystem übertragenen Drehungleichförmigkeiten zu erzeugen.

Bei einer mechanisch stabilen, baulich gleichwohl jedoch einfach und kompakt zu realisierenden Ausgestaltung der Kopplungsanordnung wird vorgeschlagen, dass diese eine mit Schmiermittel geschmierte Planetengetriebeanordnung umfasst, wobei die Planetengetriebeanordnung einen an den zweiten Drehmomentübertragungsweg angebundenen Planetenradträger mit einer Mehrzahl von daran drehbar getragenen Planetenrädern sowie eine an den ersten Drehmomentübertragungsweg angebundene erste Koppelradanordnung In Kämmeingriff mit den Planetenrädern und eine an den Ausgangsbereich angebundene zweite Koppelradanordnung in Kämmeingriff mit den Planetenrädern umfasst.

Dabei können die erste Koppelradanordnung und die zweite Koppelradanordnung jeweils eine Hohlradanordnung umfassen. Es sei hier darauf hingewiesen, dass alternativ ggf. auch die beiden Koppelradanordnungen jeweils Sonnenradanordnungen umfassen können. Weiter wird für die Beeinflussung der über die beiden Drehmomentübertragungswege zu übertragenden Drehmomentenanteile bzw. für deren Einstellung vorgeschlagen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Beispielsweise kann vorgesehen sein, dass das Schwingungssystem wenigstens zwei zueinander seriell angeordnete Schwingungsdämpfer jeweils mit einer Primärseite und einer bezüglich dieser drehbaren Sekundärseite umfasst oder/und das Schwingungssystem wenigstens zwei zueinander parallel wirksame Schwingungsdämpfer jeweils mit einer Primärseite und einer bezüglich dieser drehbaren Sekundärseite umfasst.

Um durch die Dichtungsanordnung selbst eingeführte Reibeffekte so weit als möglich auszuschließen, wird vorgeschlagen, dass diese bezuglich des ersten Drehmomentübertragungswegs oder/und des Ausgangsbereichs drehfest gehalten ist. In zumindest einem dieser Anbindungsbereiche können dann keine das Schwingungsverhalten und damit die Qualität der Phasenverschiebung beeinflussenden Reibeffekte auftreten.

Vorzugsweise ist dabei vorgesehen, dass die Dichtungsanordnung bezüglich des ersten Drehmomentübertagungswegs und bezüglich des Ausgangsbereichs drehfest gehalten ist und dass die Dichtungsanordnung einen bezüglich des ersten Drehmomentübertragungswegs drehfest gehaltenen ersten Verbindungsbereich, einen bezüglich des Ausgangsbereichs drehfest gehaltenen zweiten Verbindungsbereich und zwischen dem ersten Verbindungsbereich und dem zweiten Verbindungsbereich einen tordierbaren Dichtungskörper umfasst. Bei dieser Ausgestaltungsform ist also die Dichtungsanordnung bezüglich der beiden angesprochenen Baugruppen, also erster Drehmomentübertragungsweg und Ausgangsbereich, drehfest gehalten, so dass in keinem dieser Anbindungsbereichen Reibeffekte auftreten können. Um gleichwohl eine Relativbewegung zuzulassen, ist der Dichtungskörper tordierbar, also bei Relativdrehung des Ausgangsbereichs bezüglich des ersten Drehmomentübertragungswegs um eine Drehachse in sich um diese Drehachse verwindbar.

Es sei hier darauf hingewiesen, dass diese Relativdrehung bzw. auch die Tordierung des Dichtungskörpers Bezug nimmt auf eine Drehachse, die im Allgemeinen einer Drehachse der Drehschwingungsdämpfungsanordnung entspricht. Dies kann beispielsweise auch die Drehachse des Antriebsstrangs, insbesondere auch einer Antriebswelle, wie beispielsweise Kurbelwelle einer Brennkraftmaschine, sein.

Um die Tordierbarkeit des Dichtungskörpers in einfacher Weise erlangen zu können, kann dieser balgenartig ausgebildet sein.

Eine Ausbauchung des balgenartig und somit auch flexibel ausgebildeten Dichtungskörpers nach radial außen unter Fliehkrafteinwirkung kann dadurch verhindert bzw. zumindest beschränkt werden, dem Dichtungskörper eine Radialstützanordnung zugeordnet ist.

Bei einer alternativen Ausgestaltungsform wird vorgeschlagen, dass die Dichtungsanordnung bezüglich wenigstens einer Baugruppe von erstem Drehmomentübertragungsweg und Ausgangsbereich drehbar ist. Um in Verbindung mit der wenigstens einen Baugruppe, bezüglich welcher die Dichtungsanordnung drehbar ist, eine Dichtwirkung sicherstellen zu können, wird vorgeschlagen, dass die Dichtungsanordnung in Verbindung mit der wenigstens einen Baugruppe eine Spaltdichtungsformation bildet. Das Bereitstellen einer Spaltdichtung gewährleistet gleichermaßen, dass Reibeffekte zwischen der Dichtungsanordnung und der bezüglich dieser drehbaren bzw. bewegbaren wenigstens einen Baugruppe nicht auftreten. Dabei sollte diese Spaltdichtung in einem radialen Bereich liegen, welcher radial innerhalb des unter Fliehkrafteinwirkung sich einstellenden Füllniveaus des Schmiermittels liegt, so dass bereits die Fliehkrafteinwirkung dafür sorgt, dass das Schmiermittel nicht in Richtung zur Spaltdichtung hin, sondern von dieser weg nach radial außen bewegt wird.

Bei einer sowohl hinsichtlich des Austritts von Schmiermittels als auch hinsichtlich des Eintritts von Verunreinigungen vorteilhaften Ausgestaltungsvariante wird vorgesehen, dass die Dichtungsanordnung an der wenigstens einen Baugruppe im Wesentlichen fluiddicht anliegt oder zur Anlage bringbar ist.

Dabei kann beispielsweise vorgesehen sein, dass der Anlagezustand vorzugsweise fliehkraftabhängig veränderbar ist. Auf diese Art und Weise wird es möglich, beispielsweise unter Fliehkrafteinwirkung, also im Rotationszustand, den Anlagezustand aufzuheben, so dass Reibkräfte vermieden werden. Durch die Fliehkrafteinwirkung wird wiederum sichergestellt, dass das Schmiermittel nach radial außen, also in Richtung von demjenigen radialen Bereich, in welchem die Dichtungsanordnung ohne Fliehkraftbeaufschlagung fluiddicht an der wenigstens einen Baugruppe anliegt, weg. Dies bedeutet wiederum, dass dieser Anlagekontakt in einem Bereich generiert sein sollte, der radial innerhalb des zumindest unter Fliehkrafteinwirkung sich einstellenden Füllniveaus des Schmiermittels liegt.

Um auch bei derartiger Ausgestaltung eine definierte Positionierung der Dichtungsanordnung in der Drehschwingungsdämpfungsanordnung gewährleisten zu können, wird vorgeschlagen, dass die Dichtungsanordnung bezüglich der anderen Baugruppe von erstem Drehmomentübertragungsweg und Ausgangsbereich drehfest gehalten ist. Dazu kann beispielsweise vorgesehen sein, dass die Dichtungsanordnung einen Dichtungskörper mit einem bezüglich der anderen Baugruppe drehfest gehaltenen Dichtungskörperelement und einem in Verbindung mit der einen Baugruppe dichtend zusammenwirkenden Dichtungskörperelement umfasst.

Bei einer sehr vorteilhaften Weiterbildung kann vorgesehen sein, dass durch die Dichtungsanordnung die Kopplungsanordnung und die Phasenschieberanordnung zusammen im Wesentlichen schmiermitteldicht gekapselt sind. Durch die gemeinsame schmiermitteldichte Kapselung der Kopplungsanordnung einerseits und der Phasenschieberanordnung andererseits kann ein Gesamtvolumenbereich gekapselt werden. Dieser kann ein sowohl für die Kopplungsanordnung, als auch die Phasenschieberanordnung dann genutztes Schmiermittel enthalten, so dass nicht jeder dieser Systembereiche für sich alleine gekapselt und mit einem eigens dafür vorgesehenen Schmiermittel versehen werden muss.

Bei einer weiteren alternativen Ausgestaltungsvariante wird vorgeschlagen, dass die Dichtungsanordnung eine erste Dichtungsformation zum im Wesentlichen fluiddichten Abschluss eines Verzahnungseingriffsbereichs der ersten Koppelradanordnung mit den Planetenrädern oder/und eine zweite Dichtungsformation zum im Wesentlichen fluiddichten Abschluss eines Verzahnungseingriffsbereichs der zweiten Koppelradanordnung mit den Planetenrädern umfasst. Bei diesem Aufbau wird durch die erste Dichtungsformation bzw. auch die zweite Dichtungsformation jeweils der Verzahnungseingriffsbereich abgeschlossen, welcher für den Hindurchtritt von Schmiermittel anfällig ist. Insbesondere dann, wenn in Zuordnung zu beiden Verzahnungseingriffsbereichen jeweils eine Dichtungsformation vorgesehen ist, können diese beiden Dichtungsformationen zusammen dann einen weitergehenden, beispielsweise durch eine Spaltdichtungswirkung generierten Abschluss gegen den Austritt von Schmiermittel erreichen.

Die erste Dichtungsformation oder/und die zweite Dichtungsformation können in Zuordnung zu bzw. mit der jeweiligen Koppelradanordnung eine Schmiermittelrinne bereitstellen, wozu vorgesehen sein kann, dass die erste Dichtungsformation oder/und die zweite Dichtungsformation jeweils an der zugeordneten Koppelradanordnung beidseits des Verzahnungseingriffsbereichs drehfest gehaltene Rinnenbegrenzungselemente umfasst.

Bei denjenigen Ausgestaltungsvarianten, bei welchen die Dichtungsanordnung bezüglich zumindest einer der beiden Baugruppen Ausgangsbereich und erster Drehmomentübertragungsweg drehfest gehalten ist, kann vorgesehen sein, dass die drehfeste Halterung hergestellt ist durch
- wenigstens ein Befestigungsorgan, vorzugsweise Schraub- oder Nietbolzen
oder/und
- Verklemmung
oder/und
- Materialschluss, vorzugsweise Verschweißung oder Verlötung.

Die vorliegende Erfindung wird nachfolgend mit Bezug auf die beiliegenden Figuren detailliert beschrieben. Es zeigt:
- Fig. 1: eine Teil-Längsschnittansicht einer Drehschwingungsdämpfungsanordnung mit Leistungsverzweigung und gegen Schmiermittelaustritt gekapselter Kopplungsanordnung;
- Fig. 2: eine vergrößerte Detailansicht einer Kopplungsanordnung mit einer alternativen Ausgestaltungsart einer Dichtungsanordnung;
- Fig. 3: eine vergrößerte Detailansicht einer Kopplungsanordnung mit einer alternativen Ausgestaltungsart einer Dichtungsanordnung;
- Fig. 4: eine vergrößerte Detailansicht einer Kopplungsanordnung mit einer alternativen Ausgestaltungsart einer Dichtungsanordnung;
- Fig. 5: eine vergrößerte Detailansicht einer Kopplungsanordnung mit einer alternativen Ausgestaltungsart einer Dichtungsanordnung;
- Fig. 6: eine vergrößerte Detailansicht einer Kopplungsanordnung mit einer alternativen Ausgestaltungsart einer Dichtungsanordnung;
- Fig. 7: eine vergrößerte Detailansicht einer Kopplungsanordnung mit einer alternativen Ausgestaltungsart einer Dichtungsanordnung;
- Fig. 8: eine vergrößerte Detailansicht einer Kopplungsanordnung mit einer alternativen Ausgestaltungsart einer Dichtungsanordnung;
- Fig. 9: eine vergrößerte Detailansicht einer Kopplungsanordnung mit einer alternativen Ausgestaltungsart einer Dichtungsanordnung;
- Fig. 10: eine vergrößerte Detailansicht einer Kopplungsanordnung mit einer alternativen Ausgestaltungsart einer Dichtungsanordnung;
- Fig. 11: eine vergrößerte Detailansicht einer Kopplungsanordnung mit einer alternativen Ausgestaltungsart einer Dichtungsanordnung;
- Fig. 12: eine vergrößerte Detailansicht einer Kopplungsanordnung mit einer alternativen Ausgestaltungsart einer Dichtungsanordnung;
- Fig. 13: eine vergrößerte Detailansicht einer Kopplungsanordnung mit einer alternativen Ausgestaltungsart einer Dichtungsanordnung;
- Fig. 14: eine vergrößerte Detailansicht einer Kopplungsanordnung mit einer alternativen Ausgestaltungsart einer Dichtungsanordnung;
- Fig. 15: eine vergrößerte Detailansicht einer Kopplungsanordnung mit einer alternativen Ausgestaltungsart einer Dichtungsanordnung;
- Fig. 16: eine vergrößerte Detailansicht einer Kopplungsanordnung mit einer alternativen Ausgestaltungsart einer Dichtungsanordnung.

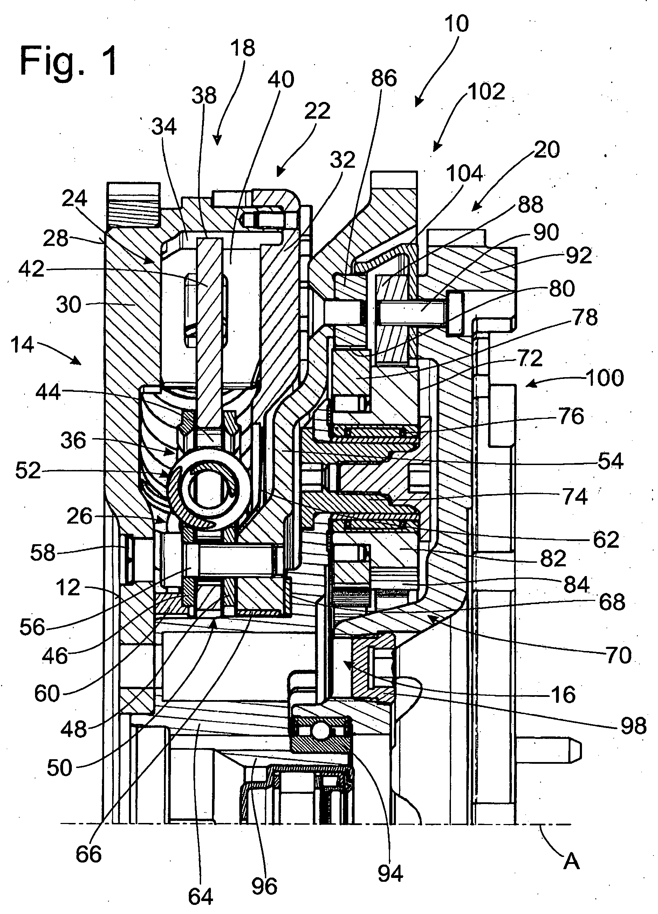

In Fig. 1 ist in Teil-Längsschnittdarstellung eine Drehschwingungsdämpfungsanordnung 10 dargestellt, die im Antriebsstrang eines Fahrzeugs beispielsweise an die Antriebswelle einer Kurbelwelle angebunden werden kann, um sich mit dieser um eine Drehachse A zu drehen und die ein Drehmoment weitergibt an folgende Bereiche eines Antriebsstrangs, beispielsweise eine Reibungskupplung. Selbstverständlich kann eine derartige Drehschwingungsdämpfungsanordnung auch in andere Bereiche eines Antriebsstrangs, beispielsweise einen hydrodynamischen Drehmomentwandler oder ein Getriebe, insbesondere Automatikgetriebe oder dergleichen, integriert werden.

Die Drehschwingungsdämpfungsanordnung 10 umfasst einen allgemein mit 12 bezeichneten Eingangsbereich, welcher durch nicht dargestellte Schraubbolzen oder dergleichen beispielsweise an eine Kurbelwelle angebunden werden kann. Im Eingangsbereich 12 findet eine Aufzweigung des zu übertragenden Drehmoments auf zwei Drehmomentübertragungswege 14, 16 statt. Im ersten Drehmomentübertragungsweg 14 ist eine nachfolgend detaillierter erläuterte Phasenschieberanordnung 18 angeordnet. Die über die beiden Drehmomentübertragungswege 14, 16 geleiteten Drehmomentenanteile werden in einer allgemein mit 20 bezeichneten Kopplungsanordnung einander überlagert, also wieder zusammengeführt, um dann in den folgenden Teil eines Antriebsstrangs weitergeleitet zu werden.

Der erste Drehmomentübertragungsweg 14 bzw. die Phasenschieberanordnung 18 desselben umfasst ein Schwingungssystem 22, das nach art einer Torsionsschwingungsdämpferanordnung aufgebaut ist. Insbesondere ist das Schwingungssystem 22 hier mit zwei seriell wirksamen Schwingungsdämpfern 24, 26 aufgebaut.

Eine Primärseite 28 des im Drehmomentenfluss auf den Eingangsbereich 12 zunächst folgenden, ersten bzw. auch radial äußeren Schwingungsdämpfers 24 umfasst ein in seinem radial inneren Bereich auf den Eingangsbereich 12 bereitstellendes Deckscheibenelement 30 und ein in einem radial äußeren Bereich mit diesem verbundenes zweites Deckscheibenelement 32. Diese beiden Deckscheibenelemente 30, 32 begrenzen radial außen fluiddicht einen Raumbereich 34, in welchem die Federanordnung 36 dieses Schwingungsdämpfers 24 angeordnet ist. Diese Federanordnung 36 kann in an sich bekannter Weise eine Mehrzahl von in Umfangsrichtung aufeinander folgenden Schraubendruckfedern oder dergleichen umfassen, die sich aneinander bzw. bezüglich der Primärseite 30 sowie einer Sekundärseite 38 über Gleitschuhe bzw. Federteller 40 oder dergleichen abstützen können. Die Sekundärseite 38 ist hier bereitgestellt durch einen radial äußeren Bereich eines Zentralscheibenelements 42, das mit seinem radial inneren Bereich eine Primärseite 44 des radial inneren, zweiten Schwingungsdämpfers 26 des Schwingungssystems 22 bereitstellt. Beidseits dieses Zentralscheibenelements 44 sind hier im radial inneren Bereich Deckscheibenelemente 46, 48 vorgesehen, welche eine Sekundärseite 50 des zweiten Schwingungsdämpfers 26 bereitstellen. Zwischen dem Zentralscheibenelement 44 und den Deckscheibenelementen 46, 48 wirkt die Federanordnung 52 des Schwingungsdämpfers 26, welche mit einer Mehrzahl von in Umfangsrichtung aufeinander folgenden bzw. ineinander geschachtelten Schraubendruckfedern oder dergleichen ausgebildet sein kann.

Bei dem Aufbau mit zwei seriell wirksamen Schwingungsdämpfern 24, 26 bildet die Primärseite 28 des ersten Schwingungsdämpfers 24 auch die Primärseite des gesamten Schwingungssystems 22, während die Sekundärseite 50 des zweiten Schwingungsdämpfers 26 auch die Sekundärseite des gesamten Schwingungssystems 22 bildet. Es ist darauf hinzuweisen, dass selbstverständlich das Schwingungssystem 22 auch mit nur einem Schwingungsdämpfer, beispielsweise dem ersten Schwingungsdämpfer 24, ausgebildet sein könnte, so dass dessen Sekundärseite 38 auch die Sekundärseite des Schwingungssystems 22 bereitstellt. Weiter ist darauf hinzuweisen, dass selbstverständlich auch mehrere Schwingungsdämpfer parallel zueinander wirken können.

Die Sekundärseite 50 des zweiten Schwingungsdämpfers 26 bzw. des Schwingungssystems 22 ist mit einem ringscheibenartigen Hohlradträger 54 durch Verschraubung oder dergleichen fest verbunden. Um Zugriff zu den Verbindungsschrauben 56 zu erlangen, sind in dem Deckscheibenelement 30 des ersten Drehmomentübertragungswegs 14 durch Verschlusskappen 58 fluiddicht abgeschlossene Durchgriffsöffnungen vorgesehen. Durch diese Abschlusskappen 58 wird auch in diesem Bereich ein fluiddichter Abschluss des nach radial außen durch die Deckscheibenelemente 30, 32 umschlossenen und die Federanordnungen 36, 52 enthaltenden Volumenbereichs erhalten. Hierzu trägt weiterhin ein Lagerungs/Dichtungselement 60 bei, über welches die Sekundärseite 50, insbesondere das Deckscheibenelement 46 des radial inneren, zweiten Schwingungsdämpfers 26 am Deckscheibenelement 30 axial abgestützt ist. An der anderen axialen Seite ist dieser Volumenbereich beispielsweise durch ein zusammen mit den beiden Deckscheibenelementen 46, 48 am Hohlradträger 54 festgelegtes, durch Vorspannung am radial inneren Endbereich des Deckscheibenelements 32 anliegendes, beispielsweise aus Blechmaterial aufgebautes Dichtungselement 62 äbgeschlossen.

Der zweite Drehmomentübertragungsweg 16 umfasst einen zusammen mit dem Deckscheibenelement 30 durch Schraubbolzen oder dergleichen an einer Antriebswelle festzulegenden Planetenradträger 64. Dieser überbrückt in seinem radial inneren Bereich die beiden Schwingungsdämpfer 24, 26 und lagert den Hohlradträger 54 in seinem radial inneren Bereich über jeweilige beispielsweise als Gleitscheiben ausgeführte Lager 66, 68. Durch diese Lager 66, 68 ist in diesem Anschlussbereich weiterhin ein fluiddichter Abschluss des die Federanordnungen 36, 52 enthaltenden Raumbereichs nach radial innen hin erzielt, so dass dieser Raumbereich durch die Deckscheibenelemente 30, 32, die Abschlusskappen 58, das Dichtungselement 60, den Planetenradträger 64, die Lagerscheiben 66, 68, den Hohlradträger 54 und das Dichtungselement 62 gegen den Austritt von Schmiermittel einerseits und den Eintritt von Verunreinigungen andererseits vollständig gekapselt ist. Dieses Schmiermittel kann beispielsweise ein viskoses Medium, wie z. B. Schmierfett oder ein zähflüssiges Schmieröl oder dergleichen, sein, welches sich insbesondere unter Fliehkrafteinwirkung vornehmlich im radial äußeren Bereich ansammeln wird und somit insbesondere die fliehkraftmäßig auch stärker belasteten Federn der Federanordnung 36 dort schmieren wird, wo sie sich nach radial außen hin am äußeren Bereich des Deckscheibenelements 30 abstützen können bzw. wo auch die Gleitschuhe bzw. Federteller 40 sich in Umfangsrichtung bewegen.

Der Planetenradträger 64 einer allgemein mit 70 bezeichneten Planetenradanordnung trägt in seinem radial äußeren und axial neben dem Hohlradträger 54 liegenden Bereich eine Mehrzahl von in Umfangsrichtung um die Drehachse A aufeinander folgenden und um jeweilige zur Drehachse A exzentrisch liegende Drehachsen drehbaren Planetenräder 72. Hierzu sind am Planetenradträger 64 in Umfangsrichtung verteilt mehrere Tragebolzen 74 vorgesehen, auf welchen die Planetenräder 72 durch Lager 76, beispielsweise als Nadellager ausgeführte Wälzkörperlager, drehbar getragen sind.

Die Planetenräder 72 sind gestuft ausgebildet und weisen an einem Planetenradteil 78 eine Verzahnung 80 mit größerem Durchmesser sowie an einem Planetenradteil 82 eine Verzahnung 84 mit kleinerem Durchmesser auf. Die beiden Planetenradteile 78, 82 sind durch Befestigungsstifte oder dergleichen miteinander fest, insbesondere drehfest verbunden. Es ist selbstverständlich, dass diese beiden Verzahnungen 80, 84 auch an einem einzigen Bauteil bereitgestellt sein könnten.

In Zuordnung zur Verzahnung 80 ist am Hohlradträger 54 ein beispielsweise ringartig vollständig um die Drehachse A sich erstreckendes erstes bzw. antriebsseitiges Hohlrad 86 durch Verschraubung, Vernietung oder Verschweißung festgelegt. In Zuordnung zur Verzahnung 84 ist ein zweites bzw. abtriebsseitiges Hohlrad 88 vorgesehen, welches sich ebenfalls ringartig geschlossen um die Drehachse A erstrecken kann. Es sei hier darauf hingewiesen, dass jedes der beiden mit den Planetenrädern 72 in Kämmeingriff stehenden Hohlräder 86, 88 jeweils segmentartig mit Hohlradsegmenten in den Bereichen, in welchen eine Wechselwirkung mit Planetenrädern 72 stattfindet, aufgebaut sein kann. Auch die Planetenräder können entsprechend segmentiert, also als Planetenradsegmente bereitgestellt sein. Die Relativdrehung, welche zwischen den beiden Hohlrädern 86, 88 und den Planetenrädern 72 erfolgen kann, ist im Wesentlichen definiert durch die zwischen der Primärseite 28 und der Sekundärseite 50 des Schwingungssytems 52 bereitgestellte maximale Relativdrehung.

Das abtriebsseitige Hohlrad 88 ist durch eine Mehrzahl von Schraubbolzen 90 mit einem Schwungrad 92 fest verbunden, welches beispielsweise eine Druckplattenbaugruppe einer Reibungskupplung tragen kann und für diese auch eine Reibfläche bereitstellen kann. In seinem radial inneren Bereich ist dieses Schwungrad 92 über ein Lager 94 auf einem in den Planetenradträger 64 eingesetzten Lageransatz 96 drehbar getragen. Dieses Lager 94 ist dabei vorzugsweise gekapselt ausgebildet und verhindert somit sowohl den Eintritt von Verunreinigungen, als auch den Austritt von Schmiermittel. Etwas radial außerhalb dieser Lagerung sind in dem Schwungrad 92 Durchgriffsöffnungen für die nicht dargestellten Befestigungsschrauben vorgesehen, mit welchen die Drehschwingungsdämpfungsanordnung 10 an einer Antriebswelle festgelegt werden kann. Diese Durchgriffsöffnungen sind durch Abschlusskappen 98 fluiddicht abgeschlossen. Durch das Schwungrad 92, die Abschlusskappen 98, das Lager 94, den Planetenradträger 64 und die diesen festlegenden und nicht dargestellten Schrauben, die Lagerscheiben 66, 68 und den Hohlradträger 54 für das antriebsseitige Hohlrad 86 ist der die Planetenräder 72 enthaltene Volumenbereich im Wesentlichen fluiddicht abgeschlossen. Somit kann auch in diesem Volumenbereich ein Schmiermittel vorgesehen werden, um zu gewährleisten, dass die Verzahnungen 80, 84 mit den zugeordneten Hohlrädern 86, 88 möglichst reibungsfrei eingreifen können. Auch hier kann als Schmiermittel vorzugsweise ein viskoses Schmierfett oder dergleichen vorgesehen werden, welches unter Fliehkrafteinwirkung sich nach radial außen verlagert und sich aus diesem Grund vornehmlich in demjenigen Bereich ansammeln wird, in welchem der Verzahnungseingriff der Planetenräder 72 mit den Hohlrädern 86, 88 erfolgt.

In der Kopplungsanordnung 20 werden die über die beiden Drehmomentübertragungswege 14, 16 übertragenen Drehmomentenanteile einander überlagert bzw. zusammengeführt und in einen im dargestellten Beispiel das Schwungrad 92 und auch das abtriebsseitige Hohlrad 88 umfassenden Ausgangsbereich 100 abgegeben. Die Wirkung der im ersten Drehmomentübertragungsweg vorhandenen Phasenschieberanordnung 18 bzw. des Schwingungssystems 22 derselben führt dazu, dass dann, wenn eine Schwingungsanregung mit einer über einer Resonanzfrequenz des Schwingungssystems 22 liegenden Anregungsfrequenz auftritt, dieses Schwingungssystem 22 in einen überkritischen Zustand übergeht, in welchem eine Phasenverschiebung zwischen der Schwingungsanregung und der dadurch ausgelösten Reaktion, also der Schwingung des abtriebsseitigen Hohlrads 86 bzw. der damit auch verkoppelten Sekundärseite 50 des ersten Drehmomentübertragungswegs 14 entsteht. Im Idealfalle beträgt diese Phasenschiebung maximal 180°. Bei der Überlagerung mit im zweiten, im Wesentlichen steifen, also nicht zu einer Resonanzschwingung anregbaren Drehmomentübertragungsweg 16 übertragenen Schwingungsanteilen, die dementsprechend auch nicht phasenverschoben sind, kommt es zu einer destruktiven Wirkung mit der Folge, dass ein im Wesentlichen geglättetes Gesamtdrehmoment in den Ausgangsbereich 100 abgegeben wird.

Die Aufteilung der über die beiden Drehmomentübertragungswege 14, 16 geleiteten Drehmomentenanteile wird im Wesentlichen beeinflusst durch das in der Planetengetriebeanordnung 70 bereitgestellte Übersetzungsverhältnis. Je nachdem, ob dieses Übersetzungsverhältnis größer als 1 ist oder kleiner als 1 ist, wird der Drehmomentenfluss auf die beiden Drehmomentübertragungswege 14, 16 eingestellt. Bei einem Übersetzungsverhältnis von größer 1, welches durch die in Fig. 1 erkennbare Stufung der Planetenräder 72 mit größerem antriebsseitigen Hohlrad 86 erreicht wird, wird über jeden der beiden Drehmomentübertragungswege 14, 16 ein Teil des Drehmoments übertragen. Bei einem Übersetzungsverhältnis von kleiner als 1, wird der über den ersten Drehmomentübertragungsweg übertragene Drehmomentenanteil gegenüber dem eingeleiteten Drehmoment verstärkt, während über den zweiten Drehmomentübertragungsweg 14 eine Drehmomentenabstützung auch am Ausgangsbereich 92 erfolgt. Dies kann durch eine anders gestaltete Stufung der Planetenräder mit größerem abtriebsseitigen Hohlrad 88 erreicht werden. Bei einem Übersetzungsverhältnis 1, also ungestuften Planetenrädern 72, würde das gesamte Drehmoment über den ersten Drehmomentübertragungsweg 14 geleitet werden und die Überlagerung der Schwingungsanteile somit nicht möglich sein. Gleichwohl können auch ungestufte Planetenräder in Verbindung mit antriebsseitigen und abtriebsseitigen Hohlrädern 86, 88 eingesetzt werden, die zur Erlangung eines von 1 sich unterscheidenden Übersetzungsverhältnisses dann mit unterschiedlichen Profilverschiebungen ihrer Zähne ausgebildet werden können.

Man erkennt jedoch in Fig. 1, dass insbesondere der Bereich, in welchem die beiden Hohlräder 86, 88 axial nebeneinander liegend angeordnet sind, der die Planetenräder 72 enthaltene Raumbereich nach radial außen offen ist und sich dort grundsätzlich insbesondere unter Fliehkraftwirkung das Schmiermittel nach radial außen bewegen könnte.

Um dies zu verhindern, ist eine allgemein mit 102 bezeichnete Dichtungsanordnung für die Kopplungsanordnung 20, d. h. die Planetengetriebeanordnung 70 derselben, vorgesehen.

Bei der in Fig. 1 dargestellten Ausgestaltungsform umfasst die Dichtungsanordnung 102 einen Dichtungskörper 104, welcher beilspielsweise aus Blechmaterial aufgebaut ist. Dieser ist bezüglich des Ausgangsbereichs 100 drehfest gehalten. Hierzu kann ein nach radial innen sich erstreckender Flanschbereich zwischen dem abtriebsseitigen Hohlrad 88 und dem Schwungrad 92 angespannt sein. Ein auf das antriebsseitige Hohlrad 86 sich zu erstreckender Abschnitt des Dichtungskörpers 104 umgibt das antriebsseitige Hohlrad 86 an seinem Außenumfangsbereich. Der Dichtungskörper 104 kann an diesem Außenumfangsbereich unter geringem Druck anliegen, kann jedoch auch unter Zwischenlassung eines Spalts zum Bereitstellen einer Spaltdichtungsformation in geringem Abstand zum Außenumfangsbereich des antriebsseitigen Hohlrads gehalten sein, so dass Reibeffekte bei der Relativumfangsdrehung zwischen den beiden Hohlrädern 86, 88 nicht auftreten können.

Durch den Dichtungskörper 104 wird der die Planetenräder 72 enthaltende Raumbereich auch nach radial außen hin dort, wo die beiden Hohlräder 86, 88 nebeneinander liegen, abgeschlossen, so dass die Kopplungsanordnung 20 hier insbesondere auch nach radial außen gegen den Austritt von Schmiermittel gekapselt ist.

Es sei darauf hingewiesen, dass selbstverständlich der Dichtungskörper 104 der Dichtungsanordnung 102 auch an den ersten Drehmomentübertragungsweg 14, hier also den Hohlradträger 54 bzw. das antriebsseitige Hohlrad 86 drehfest angebunden sein könnte, beispielsweise durch Einspannen zwischen diese beiden Bauteile, und dann bezüglich des Ausgangsbereichs, also beispielsweise des abtriebsseitigen Hohlrads 88 unter Erhalt einer Relativdrehmöglichkeit einen fluiddichten Anschluss erzeugen könnte.

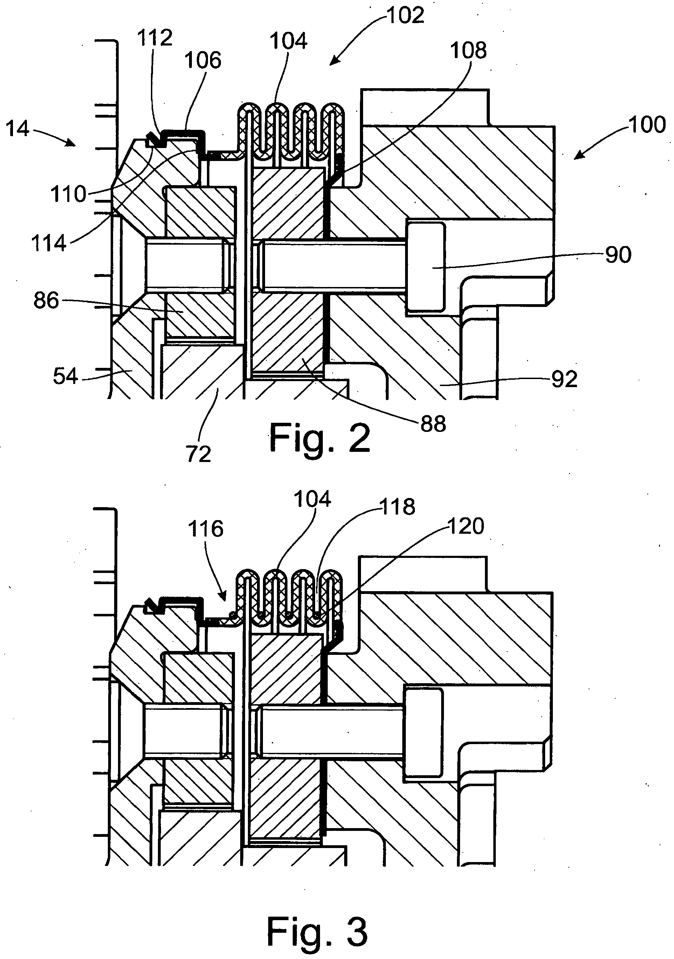

Eine alternative Ausgestaltungsform der Dichtungsanordnung 102, welche im Angrenzungsbereich der beiden Hohlräder 86, 88 für einen fluiddichten Abschluss des die Planetenräder enthaltenden Raumbereichs sorgt, ist in Fig. 2 gezeigt. Es ist darauf hinzuweisen, dass der in Fig. 2 nicht dargestellte Aufbau der Drehschwingungsdämpfungsanordnung 10 dem vorangehend mit Bezug auf die Fig. 1 detailliert beschriebenen Aufbau entsprechen kann. Es wird aus diesem Grunde im Folgenden und auch in Verbindung mit den noch weiter folgenden Ausgestaltungsformen lediglich auf die die Ausgestaltung der Dichtungsanordnung 102 relevanten Aspekte eingegangen.

Bei der in Fig. 2 dargestellten Ausgestaltungsform ist der Dichtungskörper 104 balgenartig, also als Manschette ausgebildet und beispielsweise aus Gummimaterial, TPE-Material oder Metallmaterial aufgebaut. Der Dichtungskörper 104 ist hier also mit einer Elastizität ausgebildet, welche insbesondere eine Tordierbarkeit desselben um die Drehachse A gewährleistet.

In seinen beiden axialen Endbereichen ist der Dichtungskörper 104 in diesem Ausgestaltungsbeispiel mit von diesem als separate Bauteile ausgebildeten Verbindungsbereichen 106, 108 ausgebildet. Diese jeweils ringartig um die Drehachse A sich erstreckenden Verbindungsbereiche 106, 108, welche beispielsweise aus Blechmaterial aufgebaut sein können, sind in das Aufbaumaterial des balgenartig ausgebildeten Bereichs des Dichtungskörpers 104 beispielsweise eingeformt, also durch dessen Aufbaumaterial umgossen, und weisen zur verbesserten Verbindung wulstartige Enderweiterungen auf. Der Verbindungsbereich 106 stellt den fluiddichten Anschluss an den ersten Drehmomentübertragungsweg 14, hier den Hohlradträger 54 bereit. Dieser weist in seinem Außenumfangsbereich eine nach radial außen offene Umfangsnut 110 auf, in welche ein Rastbereich 112 des Verbindungsbereichs 106 einrastet, so dass der Verbindungsbereich 106 radial außen den Hohlradträger 54 U-förmig umgreift und an diesen durch Reibungsklemmsitz drehfest, jedoch lösbar gehalten ist. Um hier die fluiddichte Wirkung zu verstärken, kann an einem axial gegen den Hohlradträger 54 durch die Rastwirkung vorgespannten Bereich des Verbindungsbereichs 106 eine Dichtfläche 114 aus Dichtmaterial, beispielsweise Polymermaterial, vorgesehen sein.

Der Verbindungsbereich 108 greift zwischen dem Schwungrad 92 und dem abtriebsseitigen Hohlrad 88 nach radial innen und ist durch die Schraubbolzen 90 zwischen diesen beiden Bauteilen eingespannt.

Die Dichtungsanordnung 102 ist bei dieser Ausgestaltungsform sowohl bezüglich des ersten Drehmomentübertragungswegs 14, insbesondere am Hohlradträger 54 desselben, als auch bezüglich des Ausgangsbereichs 100, insbesondere des Schwungrads 92 bzw. des abtriebsseitigen Hohlrads 88, drehfest gehalten. Eine Relativdrehung dieser beiden Baugruppen bezüglich einander wird durch die Tordierbarkeit des balgenartig bzw. manschettenartig ausgebildeten Dichtungskörpers 104 gewährleistet.

Auch im Verbindungsbereich 106 könnte die drehfeste Anbindung an den ersten Drehmomentübertragungsweg durch das Einspannen beispielsweise zwischen dem Hohlradträger 54 und dem antriebsseitigen Hohlrad 86 erfolgen. Selbstverständlich ist es auch möglich, einen oder beiden der Verbindungsbereiche materialschlüssig, beispielsweise durch Verschweißen oder Verlöten, an den ersten Drehmomentübertragungsweg 14 bzw. den Ausgangsbereich 100 drehfest anzubinden. Schließlich könnte auch die drehfeste Anbindung des Verbindungsbereichs 108 an den Ausgangsbereich 100 durch die in Fig. 2 in Zuordnung zum Verbindungsbereich 106 dargestellte Verklemmung beispielsweise am Außenumfang des abtriebsseitigen Hohlrads 88 erfolgen.

Ein wesentlicher Vorteil dieses Aufbaus der Dichtungsanordnung ist, dass mit Ausnahme von inneren Reibungen, die bei der Verformung des Dichtungskörpers 104 auftreten, keine Reibwirkungen in der Dichtungsanordnung 102 bei Relativbewegung zwischen dem ersten Drehmomentübertragungsweg 14 und dem Ausgangsbereich 100 entstehen. Vor allem beim Vorsehen einer durch Schnapp- bzw. Rastwirkung herzustellenden drehfesten Anbindung, also Verklemmung in Zuordnung zu einer der beiden Baugruppen, kann der fluiddichte Abschluss beim Zusammenfügen der Drehschwingungsdämpfungsanordnung 10 leicht realisiert werden.

Die Fig. 3 zeigt in Zuordnung zu dem balgenartig und somit flexibel aufgebauten Dichtungskörper 104 eine allgemein mit 116 bezeichnete Radialstützanordnung. Diese umfasst mehrere den Dichtungskörper 104 radial außen umgebende, beispielsweise in die Balgfalten 118 eingesetzte Radialstützringe 120. Diese Radialstützringe 120 verhindern ein Aufblähen des flexiblen Dichtungskörpers 104 unter Fliehkrafteinwirkung, insbesondere auch dann, wenn dieser das radial innen daran sich ansammelnde, viskose Schmiermittel im Rotationsbetrieb abstützt.

Es sei hier darauf hingewiesen, dass dann, wenn der Dichtungskörper 104 bei balgenartiger Ausgestaltung nicht mit einer Mehrzahl von axial aufeinander folgenden Falten, sondern mit einer schraubenartig sich windenden Faltung ausgebildet ist, die Radialstützanordnung ein entsprechend schraubenartig sich windendes Radialstützelement aufweisen könnte.

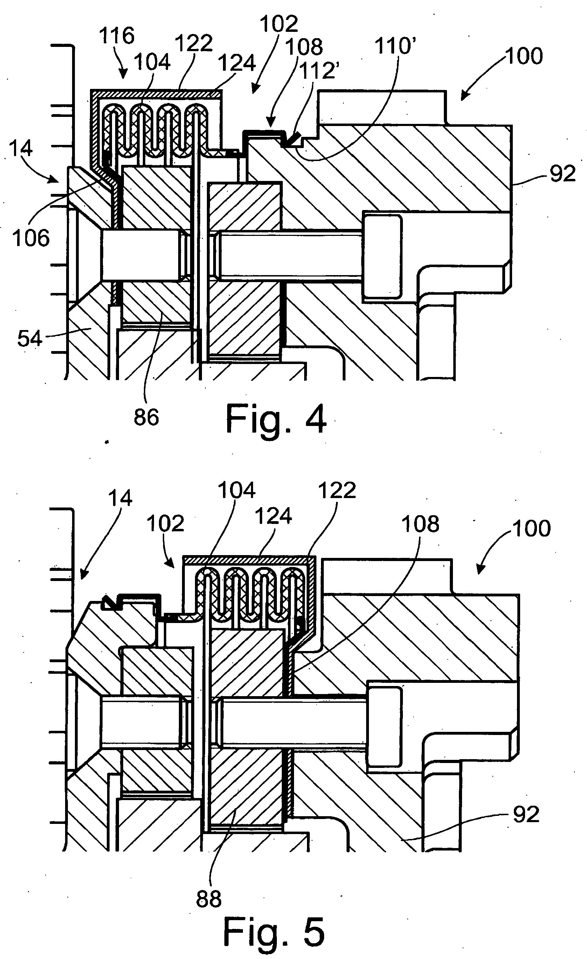

In Fig. 4 ist eine Ausgestaltungsform gezeigt, bei welcher, wie vorangehend bereits abgedeutet, die Reibungsklemmwirkung zum Herstellen einer drehfesten Halterung in Zuordnung zum Verbindungsbereich 108 und somit zum Ausgangsbereich 100 vorgesehen ist, während der erste Verbindungsbereich 106 axial zwischen dem Hohlradträger 54 und dem antriebsseitigen Hohlrad 86 eingespannt ist. Der zum Herstellen einer Rastwirkung ausgebildete Verbindungsbereich 108 wirkt hier insbesondere mit dem Schwungrad 92 zusammen und greift mit dem nunmehr daran vorgesehenen Rastbereich 112' in eine nach radial außen offene Umfangsnut 110' am Schwungrad 92 ein. Zusammen damit ist ein gehäuse- bzw. topfartig ausgebildetes Radialstützelement 122 der Radialstützanordnung 116 an den ersten Drehmomentübertragungsweg 14 angebunden, nämlich gleichermaßen zwischen dem Hohlradträger 54 und dem antriebsseitigen Hohlrad 86 eingespannt. Mit einem näherungsweise zylindrischen Radialstützbereich 124 umgibt das Radialstützelement 122 den balgenartig ausgebildeten und somit flexiblen Dichtungskörper 104 radial außen, so dass dieser unter Fliehkrafteinwirkung sich gegen das Radialstützelement 122 legen kann.

Die Fig. 5 zeigt den Einsatz des gehäuse- bzw. topfartig ausgebildeten Radialstützelements 122 bei dem in Fig. 2 erkennbaren Aufbau der Dichtungsanordnung 102. Auch hier umgibt der im Wesentlichen zylindrische Abschnitt 124 den flexiblen und balgenartig ausgebildeten Dichtungskörper 104 radial außen und stützt diesen. Das Radialstützelement ist zusammen mit dem Verbindungsbereich 108 axial zwischen dem abtriebsseitigen Hohlrad 88 und dem Schwungrad 92 eingespannt.

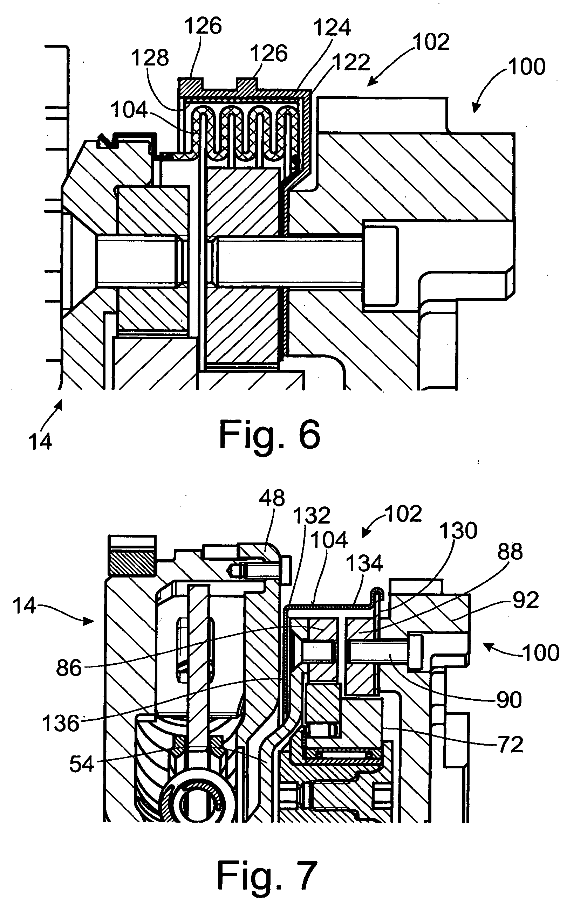

Bei der in Fig. 6 dargestellten Ausgestaltungsform ist das gehäuse- bzw. topfartig ausgebildete Radialstützelement 122 an seiner Außenseite mit daran beispielsweise ingetral ausgebildeten Versteifungsringen 126 versehen, welcher eine zusätzliche Sicherung gegen ungewünschtes Aufblähen bereitstellen. Weiter ist an der Innenseite des im Wesentlichen zylindrischen Abschnitts 124 eine Gleiteinlage 128, beispielsweise aus PTFE-Material aufgebaut, vorgesehen. Diese vermindert die Reibwirkung zwischen dem Radialstützelement 122 und dem Dichtungskörper 104, wenn dieser unter Fliehkrafteinfluss sich am Radialstützelement 122 abstützt und aufgrund einer Relativdrehung zwischen dem ersten Drehmomentübertragungsweg 14 und dem Ausgangsbereich 100 tordiert wird.

Vorangehend wurden mit Bezug auf die Fig. 2 bis 6 Ausgestaltungsformen beschrieben, bei welchen die Dichtungsanordnung 102 sowohl bezüglich des ersten Drehmomentübertragungswegs 14, als auch bezüglich des Ausgangsbereichs 100 drehfest gehalten ist. Nachfolgend werden mit Bezug auf die Fig. 7 bis 15 Ausgestaltungsformen beschrieben, bei welchen die Dichtungsanordnung 102 an einer dieser Baugruppen drehfest gehalten ist, während sie unter Herstellung eines fluiddichten Anschlusses bezüglich der anderen der beiden Baugruppen drehbar ist.

Man erkennt in Fig. 7 die mit dem Dichtungskörper 104 aufgebaute Dichtungsanordnung 102. Der Dichtungskörper 104 ist hier zweiteilig und umfasst ein erstes, im Wesentlichen ringscheibenartig ausgebildetes Dichtungskörperelement 130, das in seinem radial inneren Bereich zwischen dem abtriebsseitigen, Hohlrad 88 und dem Schwungrad 92 eingespannt ist. Ein im Wesentlichen topfartig ausgebildetes zweites Dichtungsköperelement 132 ist im axialen Endbereich einer Umfangswand durch Verkrimpung mit dem ersten Dichtungskörperelement 130 fest und fluiddicht verbunden. Hier könnte selbstverständlich auch eine Verbindung durch Verkleben, Verlöten, Verschweißen, Verschrauben oder Vernieten erfolgen.

Ein ringartig ausgebildeter Boden 136 des zweiten Dichtungskörperelements 132 greift zwischen dem Deckscheibenelement 48 und dem Hohlradträger 54 nach radial innen und stellt in Verbindung mit dem Hohlradträger 54 durch Bereitstellung einer Spaltdichtungsformation einen fliuddichten Abschluss des die Planetenräder 72 enthaltenden Raumbereichs in seinem radial äußeren Bereich bereit. Hier ist darauf hinzuweisen, dass der Boden 136 so weit nach radial innen gezogen ist, dass er denjenigen Bereich, in welchem die Planetenräder 72 mit den Hohlrädern 86, 88 in Verzahnungseingriff stehen, radial nach innen übergreifen. Der Füllstand des Schmiermittels sollte so bemessen sein, dass unter Fliehkrafteinwirkung dieser nicht nach radial innen über den radial inneren Endbereich des Bodens 136 ausgedehnt ist. Um dabei auch im nicht mit Fliehkraft beaufschlagten Zustand ein Austreten des Schmiermittels zu verhindern, sollte dieses eine derartige Viskosität aufweisen, dass es sich bei nicht vorhandener Fliehkrafteinwirkung nicht schwerkraftbedingt tropfenförmig löst und sich im unteren Bereich ansammelt. Soll eine unter Druck erfolgende Aufblähbewegung, also Verformung des Dichtungskörpers 104 vermieden werden, so kann beispielsweise das zweite Dichtungskörperelement 132 mit Versteifungseinformungen, beispielsweise Versteifungssicken, ausgebildet sein.

Ein wesentlicher Vorteil dieser Ausgestaltungsform liegt darin, dass die Dichtungsanordnung 102 berührungsfrei und damit auch reibungsfrei einen fluiddichten Abschluss herstellen kann.

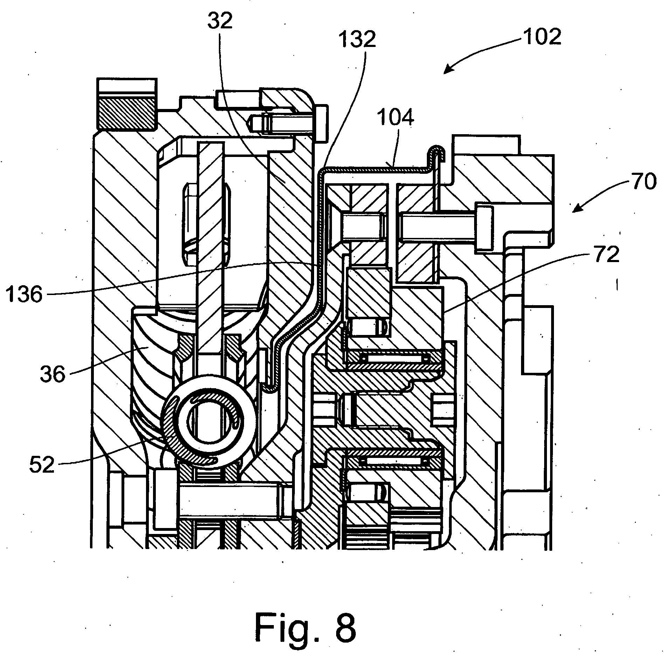

Bei der in Fig. 8 gezeigten Ausgestaltungsform ist der Boden 136 des zweiten Dichtungskörperelements 132 so weit nach radial innen gezogen, dass er den radial inneren Endbereich des Deckscheibenelements 32 axial und auch nach radial außen hin wieder übergreift. Auch hier ist die Dichtungsfunktionalität wieder berührungsfrei realisiert, so dass Reibeffekte durch die Dichtungsanordnung 102 ausgeschlossen werden können.

Bei dieser Ausgestaltungsform kann ggf. auf das mit Bezug auf die Fig. 1 beschriebene Dichtungselement 62 verzichtet werden, da durch den Dichtungskörper 104 der die Federanordnungen 36, 52 enthaltende Raumbereich und der die Planetenräder 72 der Planetenradanordnung 70 enthaltende Raumbereich zu einem gesamten Raumbereich zusammengefasst werden.

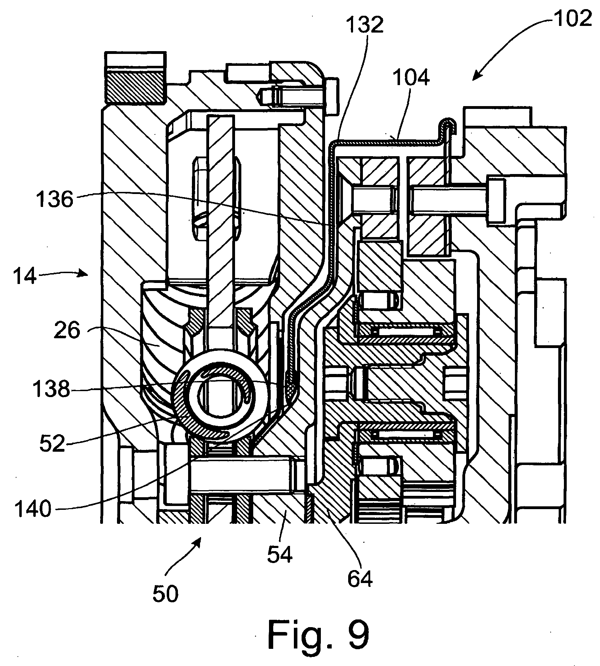

Die Fig. 9 zeigt eine Ausgestaltungsform, bei welcher der Dichtungskörper 104 mit derjenigen Baugruppe, bezüglich welcher er grundsätzlich drehbar ist, hier also dem ersten Drehmomentübertragungsweg 14, unter Herstellung eines Anlagekontakts fluiddicht abschließend zusammenwirkt. Insbesondere erkennt man, dass am radial inneren Endbereich des Bodens 136 des zweiten Dichtungskörperelements 132 ein beispielsweise aus Polymermaterial aufgebautes, elastisches Dichtungselement 138 beispielsweise durch Anspritzen vorgesehen ist. Dieses kann mit einer Dichtlippe 140 an der vom Planetenradträger 64 abgewandt liegenden axialen Seite des Hohlradträgers 54 anliegen. Um hier Reibeffekte so weit als möglich auszuschließen bzw. zu mindern, ist dieser Anlagekontakt vergleichsweise weit radial innen, nahe an der festen Verbindung der Sekundärseite 50 mit dem Hohlradträger 54, beispielsweise im radialen Niveau der Federanordnung 52 des Schwingungsdämpfers 26, vorgesehen. Somit ist ein kleiner Wirkradius mit entsprechend geringer Reibwirkung gewährleistet.

Um die Reibeffekte noch weiter zu mindern, kann die Ausgestaltung des Dichtungskörpers 104 so sein, dass dieser unter Fliehkrafteinwirkung sich nach radial außen ausbauchen kann, so dass der Boden 136 mit dem daran vorgesehenen Dichtungselement 138 zunehmend von erstem Drehmomentübertragungsweg 14, hier dem Hohlradträger 54, abhebt. Im Rotationszustand, in welchem der Austritt von Schmiermittel nach radial innen praktisch ausgeschlossen ist, wird somit das Auftreten von Reibeffekten vermieden. Auch hierzu sollte jedoch der Füllstand des Schmiermittels so gewählt sein, dass er nicht nach radial innen über die Erstreckung des Bodens 136 bzw. des Dichtungselements 138 hinaus reicht. Somit ist auch gewährleistet, dass das unter Fliehkrafteinwirkung grundsätzlich den Dichtungskörper 104 belastende Schmiermittel unmittelbar auf denjenigen Bereich einwirkt, in welchem beispielsweise durch Einsatz der Dichtlippe 140 ein Anlagekontakt hergestellt sein soll.

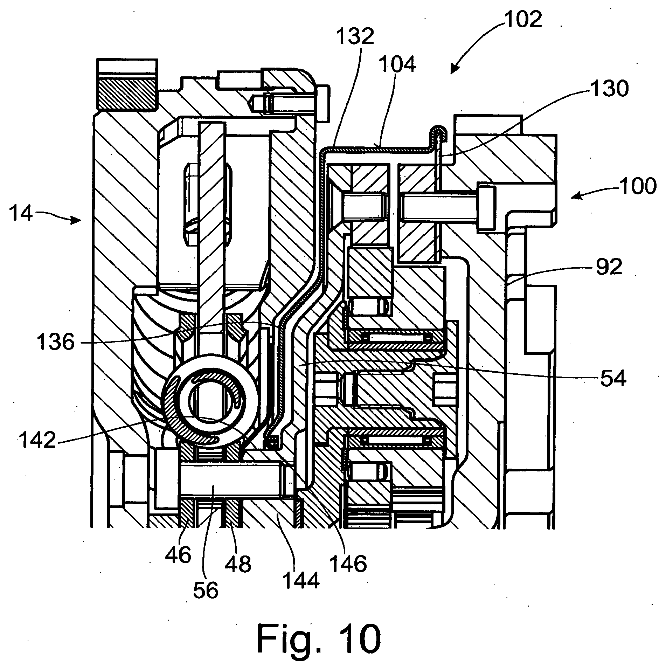

Bei der in Fig. 10 dargestellten Ausgestaltungsform ist der Boden 136 des topfartig ausgebildeten zweiten Dichtungskörperelements 132 nach radial innen bis an eine Außenumfangsfläche 142 eines im Wesentlichen zylindrischen Ansatzes 144 am radial inneren Bereich des Hohlradträgers 54 herangeführt. Zwischen dem radial inneren Endbereich des Bodens 136 und der Außenumfangsfläche 142 liegt ein in Form eines Radialwellendichtrings ausgebildetes Dichtungselement 146. Der radial innere Endbereich des Bodens 136 übergreift dabei den Radialwellendichtring und stellt zusammen mit diesem den fluiddichten Abschluss bereit.

Um auch bei dieser Ausgestaltungsform eine ungewollte Verformung des Dichtungskörpers 104 unter Fliehkraft- bzw. Druckeinfluss zu vermeiden und damit ein Loslösen des Bodens 136 vom Dichtungselement 146 zu verhindern, ist es auch hier möglich, das zweite Dichtungskörperelement 132 beispielsweise im Boden 136 oder/und in der Umfangswand 134 mit Versteifungseinformungen, beispielsweise Versteifungssicken, auszugestalten.

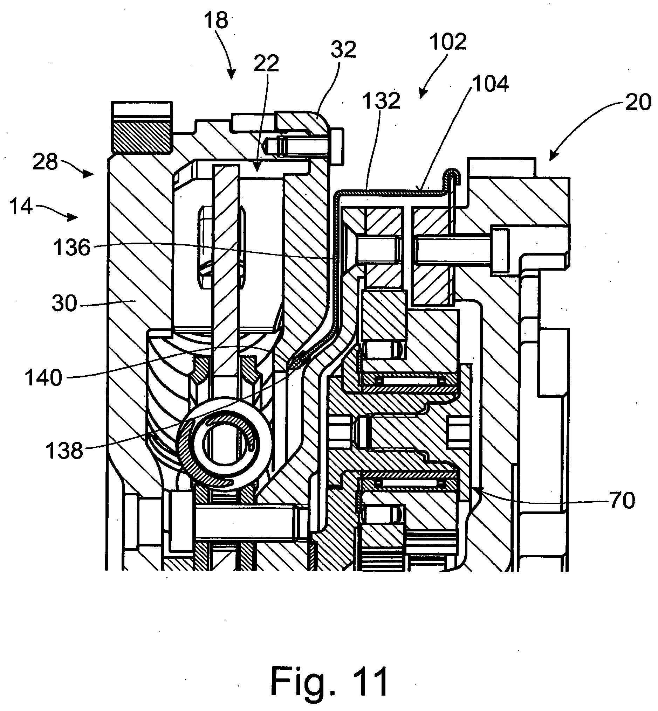

Die in Fig. 11 dargestellte Ausgestaltungsform zeigt eine Abwandlung der in Fig. 9 gezeigten Ausgestaltungsform. Auch hier ist am radial inneren Endbereich des Bodens 136 des zweiten Dichtungskörperelements 132 ein beispielsweise mit Polymermaterial aufgebautes bzw. angespritztes Dichtungselement 138 vorgesehen, das zum Herstellen des dichten Anschlusses eine Dichtlippe 140 aufweisen kann. Dieser dichte Anschluss ist nunmehr in Dichtanlage an der Primärseite 28 bzw. dem Deckscheibenelement 32 desselben und somit am ersten Drehmomentübertragungsweg 14.

Durch die Anlage des Dichtungselements 138 am Deckscheibenelement 32 wird durch die Dichtungsanordnung 102 in Verbindung mit den beiden Deckscheibenelementen 30, 32 des ersten Drehmomentübertragungswegs 14 eine Situation geschaffen, in welcher ein Gesamtvolumenbereich gekapselt wird, der einerseits die Phasenschieberanordnung 18, d. h. das Schwingungssystem 20 derselben, enthält, und andererseits die Kopplungsanordnung 20 mit ihrer Planetengetriebeanordnung 70 enthält. Eine fluiddichte Anschlussverbindung des Deckscheibenelements 32 an die Sekundärseite des radial inneren Schwingungsdämpfers 26 ist dabei nicht erforderlich, so dass in diesem Gesamtvolumenbereich ein sowohl für die Planetengetriebeanordnung 70, als auch für die Phasenschieberanordnung 22 nutzbares, gemeinsames Schmiermittel eingesetzt werden kann und zwischen diesen beiden Systembereichen grundsätzlich auch ein Schmiermittelaustausch ermöglicht ist.

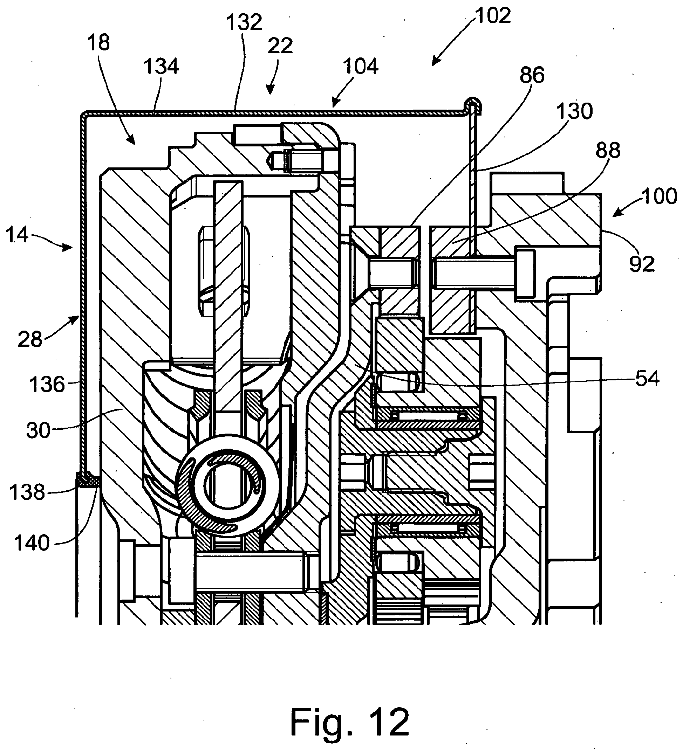

Bei der in Fig. 12 dargestellten Ausgestaltungsform ist der Dichtungskörper 104 mit seinen beiden Dichtungskörperelementen 130 und 132 so gestaltet, dass er ausgehend von seiner drehfesten Halterung am Ausgangsbereich 100 das antriebsseitige Hohlrad 86 mit seinem Hohlradträger 54 und die Phasenschieberanordnung 18, mithin also im Wesentlichen den gesamten ersten Drehmomentübertragungsweg 14 radial außen und auch an der vom Schwungrad 92 abgewandten, also einem Antriebsaggregat zugewandt zu positionierenden Seite nach radial innen übergreift. Hierzu ist einerseits das erste Dichtungskörperelement 130, das radial innen zwischen dem Schwungrad 92 und dem abtriebsseitigen Hohlrad 88 eingespannt ist, so weit nach radial außen geführt, dass die Umfangswand 134 ausgehend von ihrem durch Verkrimpung oder dergleichen am Dichtungskörperelement 130 festgelegten Bereich sich im Wesentlichen axial, also zylindrisch über die Phasenschieberanordnung 18 hinweg erstreckt. Der Boden 136 erstreckt sich dann nach radial innen und trägt beispielsweise an seinem radial inneren Bereich ein Dichtungselement 138, das ggf. mit seiner Dichtlippe 140 nunmehr an der Außenseite des Deckscheibenelements 30 der Primärseite 28 anliegt. Auch hiermit wird also eine im Wesentlichen vollständige Umkapselung generiert, welche beispielsweise weitergehende Abkapselungsmaßnahmen im Bereich der Phasenschieberanordnung 18 bzw. des Schwingungssystems 22 derselben überflüssig macht. Durch die gemeinsame Kapselung der Phasenschieberanordnung 18, d. h. des Schwingungssystems 22 desselben, und der Kopplungsanordnung 20, d. h. der Planetengetriebeanordnung 70 desselben, in einem gemeinsamen Volumenbereich, in welchem auch ein Schmiermittelaustausch zwischen diesen beiden Systembereichen stattfinden kann, wird es möglich, für die Phasenschieberanordnung 18 einerseits und die Kopplungsanordnung 20 andererseits ein gemeinsames Schmiermittel zu verwenden.

Da bei dieser Ausgestaltungsform insbesondere an der Primärseite 28 kein Anlasserzahnkranz positioniert werden kann, ist dieser an anderer Positionierung, beispielsweise am Dichtungskörper 104 selbst oder am Schwungrad 92 vorzusehen. Um ferner für die Drehzahlerfassung eines Antriebsaggregats einen Inkrementgeber vorsehen zu können, welcher primärseitig positioniert sein muss und beispielsweise mit einer Kurbelwelle drehfest verbunden sein muss, ist es möglich, ein zusätzliches scheibenförmiges Bauteil mit der Primärseite 28 außerhalb des Dichtungskörpers 104, also an der linken Seite in Fig. 12, zu verbinden. Ein derartiges Bauteil könnte gleichermaßen auch den Anlasserzahnkranz tragen.

Auch bei der in Fig. 12 dargestellten Ausgestaltungsform erfolgt die Reibwechselwirkung zwischen dem Dichtelement 138 und dem ersten Drehmomentübertragungsweg 14 vergleichsweise weit radial innen, so dass hier nur geringe Reibmomente entstehen. Grundsätzlich ist es auch hier denkbar, den Dichtungskörper 104 so zu gestalten, dass er unter Fliehkrafteinwirkung sich aufbläht und mit dem Dichtungselement 138 von dem Deckscheibenelement 130 abhebt. Sollte dies nicht gewünscht sein, kann der Dichtungselementkörper 104 mit Versteifungsrippen oder dergleichen ausgebildet sein.

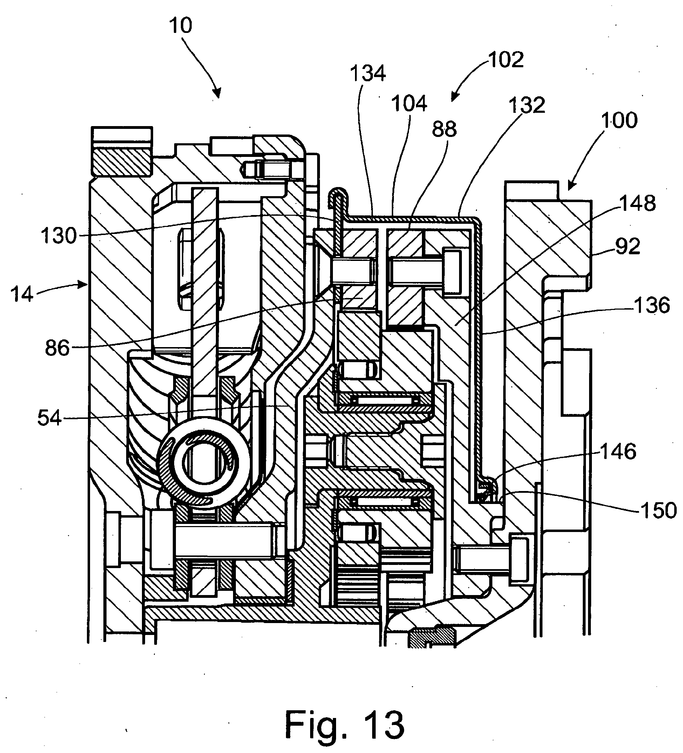

Bei der in Fig. 13 dargestellten Variante ist der Dichtungskörper 104 mit seinem ersten Dichtungskörperelement 130 am ersten Drehmomentübertragungsweg 14 drehfest gehalten. Man erkennt, dass dieses Dichtungskörperelement 130 axial zwischen dem antriebsseitigen Hohlrad 86 und dem Hohlradträger 54 gehalten ist. Die Umfangswand 134 des zweiten Dichtungskörperelements 132 übergreift das antriebsseitige Hohlrad 86, das abtriebsseitige Hohlrad 88 und ein dieses abtriebsseitige Hohlrad 88 beispielsweise mit dem Schwungrad 92 verbindendes Verbindungselement 148 des Ausgangsbereichs 100. Zwischen diesem Verbindungselement 148 und dem Schwungrad 92, also an der vom antriebsseitigen Hohlrad 26 abgewandt liegenden axialen Seite des Verbindungselements 148, erstreckt sich der Boden 136 nach radial innen und stellt zusammen mit einem als Radialwellendichtring ausgebildeten Dichtungselement 146 einen fluiddichten Abschluss her. Dieses Dichtungselement 146 liegt auf einer Außenumfangsfläche 150 des Verbindungselements 148 auf. Hier könnte selbstverständlich auch eine entsprechende Außenumfangsfläche am Schwungrad 92 zur Dichtwechselwirkung genutzt werden.

Ein Vorteil dieser Ausgestaltungsform liegt darin, dass die Drehschwingungsdämpfungsanordnung 10 mit der Dichtungsanordnung 102 vergleichsweise leicht zusammengebaut werden kann, und erst dann das Schwungrad 92 anzufügen ist.

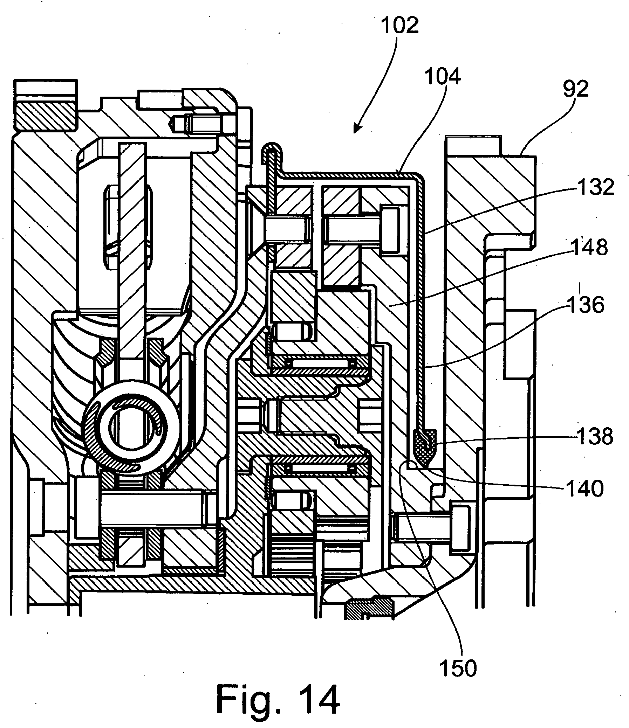

Die Fig. 14 zeigt eine Abwandlung der vorangehend mit Bezug auf die Fig. 13 beschriebenen Ausgestaltungsform. Hier ist am radial inneren Bereich des Bodens 136 des Dichtungskörpers 104 bzw. des zweiten Dichtungskörperelements 132 desselben ein beispielsweise aus Polymermaterial aufgebautes Dichtungselement 138 vorgesehen, beispielsweise angeformt. Dieses kann mit einer Dichtlippe 140 an der Außenumfangsfläche 150 des Verbindungselements 148 oder ggf. einer Außenumfangsfläche des Schwungrads 92 oder einer axialen Fläche desselben bzw. des Verbindungselements 148 anliegen.

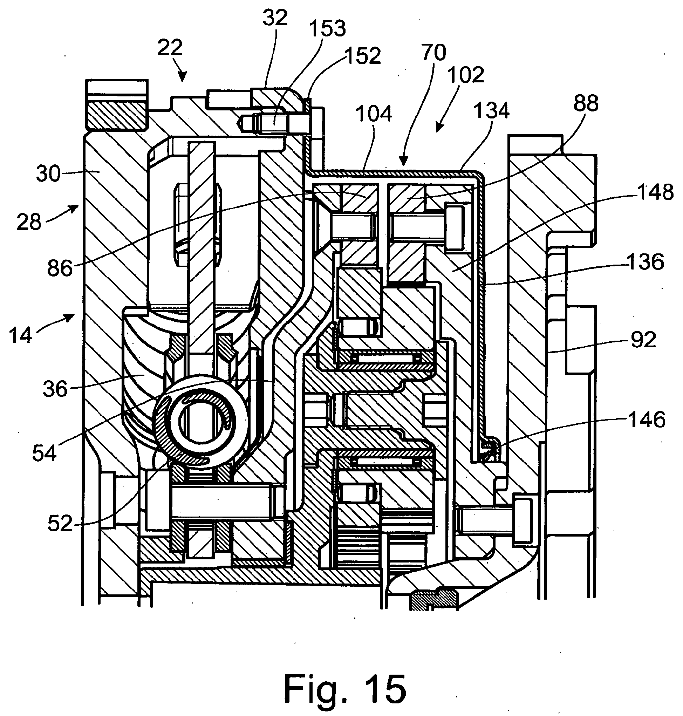

In Fig. 15 ist eine Ausgestaltungsform gezeigt, bei welcher der Dichtungskörper 104 mit seiner Umfangswand 134 und seinem Boden 136 als ein Bauteil bereitgestellt ist. An dem von der Bodenwand 136 axial entfernt liegenden Endbereich der Umfangswand 134 ist der Dichtungskörper 104 an das Deckscheibenelement 32, also die Primärseite 28, durch Verschraubung, Verschweißung oder dergleichen angebunden. Hierzu kann der Dichtungskörper 104 einen nach radial außen greifenden, flanschartigen Bereich 152 aufweisen. Zur Festlegung können Schraubbolzen 153 genutzt werden, mit welchen auch das Deckscheibenelement 32 am Deckscheibenelement 30 festgelegt wird. Hier bietet sich anstelle der Verschraubung auch eine Schweißverbindung mit einer Laserschweißnaht an, welche gleichermaßen auch dazu genutzt werden könnte, das Deckscheibenelement 32 mit dem Deckscheibenelement 30 zu verbinden.

Bei dieser Ausgestaltungsform ist der Dichtungskörper 104 der Dichtungsanordnung 102 an den primärseitigen Bereich des ersten Drehmomentübertragungswegs 104 angebunden und übergreift den Hohlradträger 54 mit dem antriebsseitigen Hohlrad 86, das abtriebsseitige Hohlrad 88 mit dem Verbindungselement 148 mit seiner Umfangswand 134 axial. Der Boden 136 erstreckt sich zwischen dem Verbindungselement 148 und dem Schwungrad 92 nach radial innen und liegt beispielsweise über ein als Radialwellendichtring ausgebildetes Dichtungselement 146 am Verbindungselement 148 oder am Schwungrad 92 fluiddicht abschließend an.

Ähnlich wie bei vorangehend bereits beschriebenen Ausgestaltungsformen ist hier für die Federanordnungen 36, 52 des Schwingungssystems 22 und die Planetenradanordnung 70 eine gemeinsame Kapselung nach radial außen realisiert.

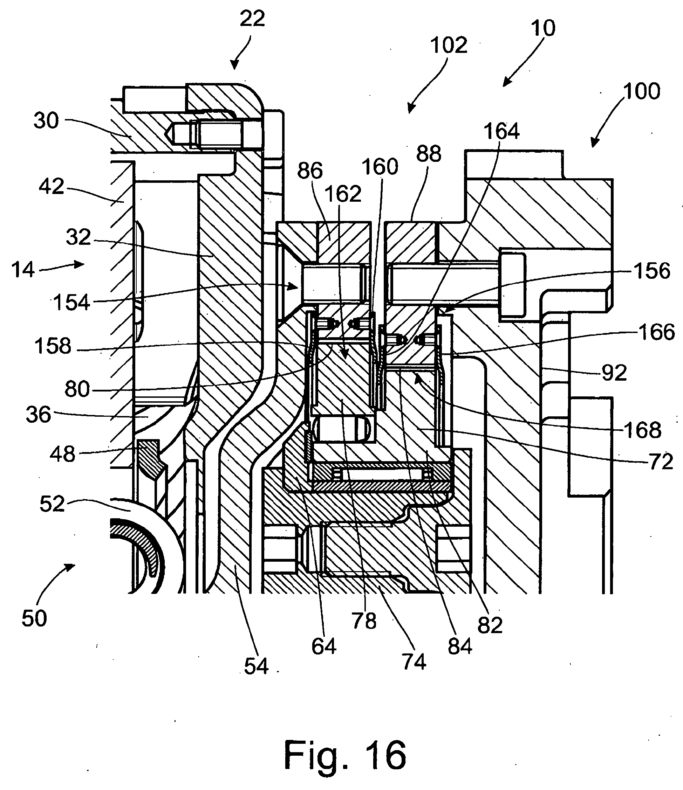

In Fig. 16 ist eine Ausgestaltungsform gezeigt, bei welcher die Dichtungsanordnung 102 sowohl in Zuordnung zum antriebsseitigen Hohlrad 86, als auch in Zuordnung zum abtriebsseitigen Hohlrad 88 jeweils eine Dichtungsformation 154 bzw. 156 umfasst. Die Dichtungsformation 154 für das antriebsseitige Hohlrad 86 umfasst zwei beidseits desselben liegende und beispielsweise an dessen beiden Stirnseiten durch Verschraubung, Vernietung, Verschweißung, Verlötung oder in sonstiger Weise festgelegte und sich nach radial einwärts erstreckende Begrenzungselemente 158, 160. Diese begrenzen zusammen mit dem antriebsseitigen Hohlrad 86 eine nach radial innen offene Schmiermittelrinne 162.

Gleichermaßen sind am abtriebsseitigen Hohlrad 88 beispielsweise an dessen beiden Stirnseiten Begrenzungselemente 164, 166 durch Verschraubung, Vernietung, Verschweißen, Verlöten oder dergleichen festgelegt. Auch diese erstrecken sich nach radial innen und begrenzen zusammen mit dem abtriebsseitigen Hohlrad 88 eine nach radial innen offene Schmiermittelrinne 168.

Jede dieser Schmiermittelrinnen ist so definiert, dass sie den Verzahnungseingriffsbereich zwischen den Hohlrädern 86, 88 und den zugeordneten Verzahnungen 80, 84 der Planetenräder 72 nach radial innen übergreift und mithin nach radial außen fluiddicht abschließt. Dabei greifen das Begrenzungselement 160 oder/und das Begrenzungselement 164 der Schmiermittelrinne 168 nach radial innen in einen axialen Zwischenraum, welcher zwischen den beiden Planetenradteilen 78 und 82 gebildet ist. Insbesondere erkennt man, dass die verschiedenen Schmiermittelrinnen 162 und 168 zugeordneten Begrenzungselemente 160, 164 nahe aneinander herangeführt sind, so dass zwischen diesen eine Spaltdichtungsformation gebildet ist, deren Dichtfunktionalität dadurch noch verstärkt bzw. unterstützt wird, dass eines dieser Begrenzungselemente, nämlich das Begrenzungselement 164, das andere der Begrenzungselemente, nämlich das Begrenzungselement 160, radial innen axial zumindest überlappt oder übergreift.

Um in demjenigen Bereich, in welchem die Hohlräder 86, 88 mit den Verzahnungen 80, 84 der Planetenräder 72 in Kämmeingriff stehen, ein ausreichendes Schmiermittelreservoir bereitzustellen, können diese Begrenzungselemente 158, 160,164, 166 bzw. einige davon mit einem Doppel-S-Schlag ausgebildet sein.

Man erkennt, dass bei dieser Ausgestaltungsform ein Teil der Dichtungsanordnung 102 bezüglich des ersten Drehmomentübertragungswegs 14, nämlich dem an der Sekundärseite 50 des Schwingungssystems 22 festgelegten antriebsseitigen Hohlrad 86, drehfest gehalten ist, während der andere Teil der Dichtungsanordnung 102 bezüglich des Ausgangsbereichs 100, nämlich am abtriebsseitigen Hohlrad 88, drehfest gehalten ist. Diese beiden Bereiche sind grundsätzlich bezüglich einander drehbar, stellen jedoch in ihrem Angrenzungsbereich im dargestellten Beispiel berührungslos eine Spaltdichtungsformation bereit. Hier könnte tatsächlich auch vorgesehen sein, dass die beiden Begrenzungselemente 160 und 164 sich gegenseitig berühren, beispielsweise unter Zwischenlagerung eines Dichtungselements, beispielsweise aus Polymermaterial, um einen durch Berührungskontakt vollständigen Abschluss zu erzielen.

Um bei dieser Ausgestaltungsform insbesondere dann, wenn eine Spaltdichtungsformation gebildet ist, den Fluidaustritt weiter zu verhindern, sollte ein Schmiermittel einsetzen, das auch bei nicht vorhandener Fliehkrafteinwirkung ausreichend zäh ist, dass es nicht herabtropft, sondern im Bereich der Schmiermittelrinnen 162 bzw. 168 verbleibt.

Es ist selbstverständlich, dass die verschiedenen vorangehend beschriebenen Ausgestaltungsformen insbesondere hinsichtlich der zum Herstellen eines fluiddichten Anschlusses eingesetzten Elemente, wie z. B. Dichtungselement aus Polymer oder sonstigem elastischen Material, Radialwellendichtring, Spaltdichtungsformation, beliebig miteinander kombiniert werden können. Auch ist es selbstverständlich, dass der Dichtungskörper ggf. mit mehr als zwei Dichtungskörperelementen aufgebaut sein kann.

## Patentansprüche

1. Drehschwingungsdämpfungsanordnung, insbesondere für einen Antriebsstrang, umfassend einen Eingangsbereich (12) und einen Ausgangsbereich (100), wobei zwischen dem Eingangsbereich (12) und dem Ausgangsbereich (100) ein erster Drehmomentübertragungsweg (14) und parallel dazu ein zweiter Drehmomentübertragungsweg (16) sowie eine Kopplungsanordnung (20) zur Überlagerung der über die Drehmomentübertragungswege (14, 16) geleiteten Drehmomente vorgesehen sind, wobei die Drehschwingungsdämpfungsanordnung ferner wenigstens im ersten Drehmomentübertragungsweg (14) eine Phasenschieberanordnung (18) umfasst zur Erzeugung einer Phasenverschiebung von über den ersten Drehmomentübertragungsweg (14) geleiteten Drehungleichförmigkeiten bezüglich über den zweiten Drehmomentübertragungsweg (16) geleiteten Drehungleichförmigkeiten, ferner umfassend eine Dichtungsanordnung (102) zur im Wesentlichen schmiermitteldichten Kapselung wenigstens der Kopplungsanordnung (20),
wobei die Kopplungsanordnung (20) eine mit Schmiermittel geschmierte Planetengetriebeanordnung (70) umfasst, wobei die Planetengetriebeanordnung (70) einen an den zweiten Drehmomentübertragungsweg (16) angebundenen Planetenradträger (64) mit einer Mehrzahl von daran drehbar getragenen Planetenrädern (72) sowie eine an den ersten Drehmomentübertragungsweg (14) angebundene erste Koppelradanordnung (86) in Kämmeingriff mit den Planetenrädern (72) umfasst, **dadurch gekennzeichnet, daß** die Planetengetriebeanordnung (70) eine an den Ausgangsbereich (100) angebundene zweite Koppelradanordnung (88) in Kämmeingriff mit den Planetenrädern (72) umfasst, und
die erste Koppelradanordnung (86) und die zweite Koppelradanordnung (88) jeweils eine Hohlradanordnung (86, 88) umfasst.

2. Drehschwingungsdämpfungsanordnung nach Anspruch 1, **dadurch gekennzeichnet, dass** die Phasenschieberanordnung (18) ein Schwingungssystem (22) mit einer Primärseite (28) und einer gegen die Wirkung einer Federanordnung (36, 52) bezüglich der Primärseite (28) um eine Drehachse (A) drehbaren Sekundärseite (50) umfasst.

3. Drehschwingungsdämpfungsanordnung nach einem der Ansprüche 1 oder 2, **dadurch gekennzeichnet, dass** das Schwingungssystem (22) wenigstens zwei zueinander seriell angeordnete Schwingungsdämpfer (24, 26) jeweils mit einer Primärseite (28, 44) und einer bezüglich dieser drehbaren Sekundärseite (38, 50) umfasst.

4. Drehschwingungsdämpfungsanordnung nach einem der Ansprüche 1 bis 3, **dadurch gekennzeichnet, dass** das Schwingungssystem (22) wenigstens zwei zueinander parallel wirksame Schwingungsdämpfer jeweils mit einer Primärseite und einer bezüglich dieser drehbaren Sekundärseite umfasst.

5. Drehschwingungsdämpfungsanordnung nach einem der vorhergehenden Ansprüchen, **dadurch gekennzeichnet, dass** die erste Koppelradanordnung (86) in Verbindung mit den Planetenrädern (72) und die zweite Koppelradanordnung (88) in Verbindung mit den Planetenrädern (72) zueinander unterschiedliche Übersetzungsverhältnisse bereitstellen.

6. Drehschwingungsdämpfungsanordnung nach einem der Ansprüche 1 bis 5, **dadurch gekennzeichnet, dass** die Dichtungsanordnung (102) bezüglich des ersten Drehmomentübertragungswegs (14) oder/und des Ausgangsbereichs (100) drehfest gehalten ist.

7. Drehschwingungsdämpfungsanordnung nach Anspruch 6, **dadurch gekennzeichnet, dass** die Dichtungsanordnung (102) bezüglich des ersten Drehmomentübertagungswegs (14) und bezüglich des Ausgangsbereichs (100) drehfest gehalten ist und dass die Dichtungsanordnung (102) einen bezüglich des ersten Drehmomentübertragungswegs (14) drehfest gehaltenen ersten Verbindungsbereich (106), einen bezüglich des Ausgangsbereichs (100) drehfest gehaltenen zweiten Verbindungsbereich (108) und zwischen dem ersten Verbindungsbereich (106) und dem zweiten Verbindungsbereich (108) einen tordierbaren Dichtungskörper (104) umfasst.

8. Drehschwingungsdämpfungsanordnung nach Anspruch 7, **dadurch gekennzeichnet, dass** der Dichtungskörper (104) balgenartig ausgebildet ist.

9. Drehschwingungsdämpfungsanordnung nach Anspruch 8, **dadurch gekennzeichnet, dass** dem Dichtungskörper (104) eine Radialstützanordnung (116) zugeordnet ist.

10. Drehschwingungsdämpfungsanordnung nach einem der Ansprüche 1 bis 6, **dadurch gekennzeichnet, dass** die Dichtungsanordnung (102) bezüglich wenigstens einer Baugruppe von erstem Drehmomentübertragungsweg (14) und Ausgangsbereich (100) drehbar ist.

11. Drehschwingungsdämpfungsanordnung nach Anspruch 10, **dadurch gekennzeichnet, dass** die Dichtungsanordnung (102) in Verbindung mit der wenigstens einen Baugruppe eine Spaltdichtungsformation bildet.

12. Drehschwingungsdämpfungsanordnung nach Anspruch 10 oder 11, **dadurch gekennzeichnet, dass** die Dichtungsanordnung (102) an der wenigstens einen Baugruppe im Wesentlichen fluiddicht anliegt oder zur Anlage bringbar ist.

13. Drehschwingungsdämpfungsanordnung nach Anspruch 12, **dadurch gekennzeichnet, dass** der Anlagezustand vorzugsweise fliehkraftabhängig veränderbar ist.

14. Drehschwingungsdämpfungsanordnung nach einem der Ansprüche 10 bis 13, **dadurch gekennzeichnet, dass** die Dichtungsanordnung (102) bezüglich der anderen Baugruppe von erstem Drehmomentübertragungsweg (14) und Ausgangsbereich (100) drehfest gehalten ist.

15. Drehschwingungsdämpfungsanordnung nach Anspruch 14, **dadurch gekennzeichnet, dass** die Dichtungsanordnung (102) einen Dichtungskörper (104) mit einem bezüglich der anderen Baugruppe drehfest gehaltenen Dichtungskörperelement (130) und einem in Verbindung mit der einen Baugruppe dichtend zusammenwirkenden Dichtungskörperelement (132) umfasst.

16. Drehschwingungsdämpfungsanordnung nach einem der Ansprüche 1 bis 15, **dadurch gekennzeichnet, dass** durch die Dichtungsanordnung (102) die Kopplungsanordnung (20) und die Phasenschieberanordnung (18) zusammen im Wesentlichen schmiermitteldicht gekapselt sind.

17. Drehschwingungsdämpfungsanordnung nach einem der vorhergehenden Ansprüchen, **dadurch gekennzeichnet, dass** die Dichtungsanordnung (102) eine erste Dichtungsformation (154) zum im Wesentlichen fluiddichten Abschluss eines Verzahnungseingriffsbereichs der ersten Koppelradanordnung (86) mit den Planetenrädern (72) oder/und eine zweite Dichtungsformation (156) zum im Wesentlichen fluiddichten Abschluss eines Verzahnungseingriffsbereichs der zweiten Koppelradanordnung (88) mit den Planetenrädern (72) umfasst.

18. Drehschwingungsdämpfungsanordnung nach Anspruch 17, **dadurch gekennzeichnet, dass** die erste Dichtungsformation (154) mit der ersten Koppelradanordnung (86) oder/und die zweite Dichtungsformation (156) mit der zweiten Koppelradanordnung (88) eine Schmiermittelrinne (162, 168) bereitstellt.

19. Drehschwingungsdämpfungsanordnung nach Anspruch 18, **dadurch gekennzeichnet, dass** die erste Dichtungsformation (154) oder/und die zweite Dichtungsformation (156) jeweils an der zugeordneten Koppelradanordnung (86, 88) beidseits des Verzahnungseingriffsbereichs drehfest gehaltene Rinnenbegrenzungselemente (158, 160, 164, 166) umfasst.

20. Drehschwingungsdämpfungsanordnung nach Anspruch 6, 14, 15 oder 19, **dadurch gekennzeichnet, dass** die drehfeste Halterung hergestellt ist durch
- wenigstens ein Befestigungsorgan, vorzugsweise Schraub- oder Nietbolzen
oder/und
- Verklemmung
oder/und
- Materialschluss, vorzugsweise Verschweißung oder Verlötung.

## Claims

1. Rotary vibration damping arrangement, in particular for a drivetrain, comprising an input region (12) and an output region (100), wherein a first torque transmission path (14) and, parallel thereto, a second torque transmission path (16) are provided between the input region (12) and the output region (100), and comprising a coupling arrangement (20) for the superposition of the torques conducted via the torque transmission paths (14, 16), wherein the rotary vibration damping arrangement furthermore comprises, at least in the first torque transmission path (14), a phase shift arrangement (18) for generating a phase shift of rotational non-uniformities conducted via the first torque transmission path (14) with respect to rotational non-uniformities conducted via the second torque transmission path (16), furthermore comprising a seal arrangement (102) for substantially lubricant-tight encapsulation of at least the coupling arrangement (20),
wherein the coupling arrangement (20) comprises a planetary gearing arrangement (70) which is lubricated with lubricant, wherein the planetary gearing arrangement (70) comprises a planet gear carrier (64), which is connected to the second torque transmission path (16) and which has a multiplicity of planet gears (72) rotatably supported thereon, and a first coupling gear arrangement (86), which is connected to the first torque transmission path (14) and which is in meshing engagement with the planet gears (72), **characterized in that** the planetary gearing arrangement (70) comprises a second coupling gear arrangement (88) which is connected to the output region (100) and which is in meshing engagement with the planet gears (72), and
the first coupling gear arrangement (86) and the second coupling gear arrangement (88) comprise in each case one internal gear arrangement (86, 88).

2. Rotary vibration damping arrangement according to Claim 1, **characterized in that** the phase shift arrangement (18) comprises a vibration system (22) with a primary side (28) and with a secondary side (50) which is rotatable relative to the primary side (28) about an axis of rotation (A) counter to the action of a spring arrangement (36, 52).

3. Rotary vibration damping arrangement according to either of Claims 1 and 2, **characterized in that** the vibration system (22) comprises at least two vibration dampers (24, 26) which are arranged in series with one another and which each have a primary side (28, 44) and a secondary side (38, 50) rotatable relative to said primary side.

4. Rotary vibration damping arrangement according to one of Claims 1 to 3, **characterized in that** the vibration system (22) comprises at least two vibration dampers which act in parallel with one another and which each have a primary side and a secondary side rotatable relative to said primary side.

5. Rotary vibration damping arrangement according to one of the preceding claims, **characterized in that** the first coupling gear arrangement (86), in conjunction with the planet gears (72), and the second coupling gear arrangement (88), in conjunction with the planet gears (72), provide mutually different transmission ratios.

6. Rotary vibration damping arrangement according to one of Claims 1 to 5, **characterized in that** the seal arrangement (102) is held rotationally conjointly with respect to the first torque transmission path (14) and/or with respect to the output region (100).

7. Rotary vibration damping arrangement according to Claim 6, **characterized in that** the seal arrangement (102) is held rotationally conjointly with respect to the first torque transmission path (14) and with respect to the output region (100), and **in that** the seal arrangement (102) has a first connecting region (106), which is held rotationally conjointly with respect to the first torque transmission path (14), a second connecting region (108), which is held rotationally conjointly with respect to the output region (100), and a twistable seal body (104) between the first connecting region (106) and the second connecting region (108).

8. Rotary vibration damping arrangement according to Claim 7, **characterized in that** the seal body (104) is of bellows-like form.

9. Rotary vibration damping arrangement according to Claim 8, **characterized in that** the seal body (104) is assigned a radial support arrangement (116).

10. Rotary vibration damping arrangement according to one of Claims 1 to 6, **characterized in that** the seal arrangement (102) is rotatable relative to at least one assembly out of first torque transmission path (14) and output region (100).

11. Rotary vibration damping arrangement according to Claim 10, **characterized in that** the seal arrangement (102) forms a gap seal formation in conjunction with the at least one assembly.

12. Rotary vibration damping arrangement according to Claim 10 or 11, **characterized in that** the seal arrangement (102) abuts against, or can be placed in abutment with, the at least one assembly in a substantially fluid-tight manner.

13. Rotary vibration damping arrangement according to Claim 12, **characterized in that** the state of abutment can be varied preferably in a manner dependent on centrifugal force.

14. Rotary vibration damping arrangement according to one of Claims 10 to 13, **characterized in that** the seal arrangement (102) is held rotationally conjointly with respect to the other assembly out of first torque transmission path (14) and output region (100).

15. Rotary vibration damping arrangement according to Claim 14, **characterized in that** the seal arrangement (102) comprises a seal body (104) with a seal body element (130), which is held rotationally conjointly with respect to the other assembly, and a seal body element (132), which interacts sealingly in conjunction with the first assembly.

16. Rotary vibration damping arrangement according to one of Claims 1 to 15, **characterized in that** the coupling arrangement (20) and the phase shift arrangement (18) are encapsulated together in substantially lubricant-tight fashion by means of the seal arrangement (102).

17. Rotary vibration damping arrangement according to one of the preceding claims, **characterized in that** the seal arrangement (102) comprises a first seal formation (154), for closing off a region of toothing engagement between the first coupling gear arrangement (86) and the planet gears (72) in substantially fluid-tight fashion, and/or a second seal formation (156), for closing off a region of toothing engagement between the second coupling gear arrangement (88) and the planet gears (72) in substantially fluid-tight fashion.

18. Rotary vibration damping arrangement according to Claim 17, **characterized in that** the first seal formation (154) together with the first coupling gear arrangement (86), and/or the second seal formation (156) together with the second coupling gear arrangement (88), provide(s) a lubricant channel (162, 168).

19. Rotary vibration damping arrangement according to Claim 18, **characterized in that** the first seal formation (154) and/or the second seal formation (156) comprise(s), in each case on the associated coupling gear arrangement (86, 88), channel-delimiting elements (158, 160, 164, 166) held rotationally conjointly on both sides of the region of toothing engagement.

20. Rotary vibration damping arrangement according to Claim 6, 14, 15 or 19, **characterized in that** the rotationally conjoint holding action is realized by way of
- at least one fastening element, for example threaded bolts or rivets,
and/or
- a clamping action
and/or
- material cohesion, preferably welding or brazing.

## Revendications

1. Ensemble d'amortissement des vibrations de torsion, en particulier pour une chaîne cinématique, comprenant une région d'entrée (12) et une région de sortie (100), une première voie de transfert de couple (14) étant prévue entre la région d'entrée (12) et la région de sortie (100) et, parallèlement à celle-ci, une deuxième voie de transfert de couple (16) étant prévue ainsi qu'un agencement d'accouplement (20) pour superposer les couples guidés par le biais des voies de transfert de couple (14, 16), l'agencement d'amortissement des vibrations de torsion comprenant en outre au moins, dans la première voie de transfert de couple (14), un agencement de déphasage (18) pour générer un déphasage des irrégularités de rotation transférées par le biais de la première voie de transfert de couple (14) par rapport aux irrégularités de rotation transférées par le biais de la deuxième voie de transfert de couple (16), comprenant en outre un agencement d'étanchéité (102) pour l'encapsulage essentiellement étanche aux lubrifiants d'au moins l'agencement d'accouplement (20),
l'agencement d'accouplement (20) comprenant un agencement d'engrenage planétaire (70) lubrifié avec un lubrifiant, l'agencement d'engrenage planétaire (70) comprenant un porte-satellites (64) raccordé à la deuxième voie de transfert de couple (16), avec une pluralité de satellites (72) supportés à rotation sur celui-ci, ainsi qu'un premier agencement de roue d'accouplement (86) raccordé à la première voie de transfert de couple (14) en engagement d'engrènement avec les satellites (72), **caractérisé en ce que** l'agencement d'engrenage planétaire (70) comprend un deuxième agencement de roue d'accouplement (88) raccordé à la région de sortie (100) en prise d'engrènement avec les satellites (72), et
le premier agencement de roue d'accouplement (86) et le deuxième agencement de roue d'accouplement (88) comprennent chacun un agencement de couronne dentée (86, 88).

2. Ensemble d'amortissement des vibrations de torsion selon la revendication 1, **caractérisé en ce que** l'agencement de déphasage (18) comprend un système oscillant (22) avec un côté primaire (28) et un côté secondaire (50) pouvant tourner autour d'un axe de rotation (A) à l'encontre de l'effet d'un agencement de ressort (36, 52) par rapport au côté primaire (28).

3. Ensemble d'amortissement des vibrations de torsion selon l'une quelconque des revendications 1 ou 2, **caractérisé en ce que** le système oscillant (22) comprend au moins deux amortisseurs de vibrations (24, 26) disposés en série, comprenant chacun un côté primaire (28, 44) et un côté secondaire (38, 50) pouvant tourner par rapport à celui-ci.

4. Ensemble d'amortissement des vibrations de torsion selon l'une quelconque des revendications 1 à 3, **caractérisé en ce que** le système oscillant (22) comprend au moins deux amortisseurs de vibrations agissant parallèlement l'un à l'autre ayant chacun un côté primaire et un côté secondaire pouvant tourner par rapport à celui-ci.

5. Ensemble d'amortissement des vibrations de torsion selon l'une quelconque des revendications précédentes, **caractérisé en ce que** le premier agencement de roue d'accouplement (86) en liaison avec les satellites (72) et le deuxième agencement de roue d'accouplement (88) en liaison avec les satellites (72) fournissent des rapports de démultiplication différents les uns des autres.

6. Ensemble d'amortissement des vibrations de torsion selon l'une quelconque des revendications 1 à 5, **caractérisé en ce que** l'agencement d'étanchéité (102) est retenu de manière solidaire en rotation par rapport à la première voie de transfert de couple (14) et/ou à la région de sortie (100).

7. Ensemble d'amortissement des vibrations de torsion selon la revendication 6, **caractérisé en ce que** l'agencement d'étanchéité (102) est retenu de manière solidaire en rotation par rapport à la première voie de transfert de couple (14) par rapport à la région de sortie (100) et **en ce que** l'agencement d'étanchéité (102) comprend une première région de liaison (106) retenue de manière solidaire en rotation par rapport à la première voie de transfert de couple (14), une deuxième région de liaison (108) retenue de manière solidaire en rotation par rapport à la région de sortie (100) et un corps d'étanchéité (104) pouvant être soumis à une torsion entre la première région de liaison (106) et la deuxième région de liaison (108).

8. Ensemble d'amortissement des vibrations de torsion selon la revendication 7, **caractérisé en ce que** le corps d'étanchéité (104) est réalisé à la manière d'un soufflet.

9. Ensemble d'amortissement des vibrations de torsion selon la revendication 8, **caractérisé en ce qu'**un agencement de support radial (116) est associé au corps d'étanchéité (104).

10. Ensemble d'amortissement des vibrations de torsion selon l'une quelconque des revendications 1 à 6, **caractérisé en ce que** l'agencement d'étanchéité (102) peut tourner par rapport à au moins un module formé de la première voie de transfert de couple (14) et de la région de sortie (100).

11. Ensemble d'amortissement des vibrations de torsion selon la revendication 10, **caractérisé en ce que** l'agencement d'étanchéité (102) forme une formation de joint d'étanchéité à fente en liaison avec l'au moins un module.

12. Ensemble d'amortissement des vibrations de torsion selon la revendication 10 ou 11, **caractérisé en ce que** l'agencement d'étanchéité (102) s'applique ou peut être amené en appui de manière essentiellement étanche aux fluides contre l'au moins un module.

13. Ensemble d'amortissement des vibrations de torsion selon la revendication 12, **caractérisé en ce que** l'état d'application peut être modifié de préférence en fonction de la force centrifuge.

14. Ensemble d'amortissement des vibrations de torsion selon l'une quelconque des revendications 10 à 13, **caractérisé en ce que** l'agencement d'étanchéité (102) est retenu de manière solidaire en rotation par rapport à l'autre module formé de la première voie de transfert de couple (14) et de la région de sortie (100).

15. Ensemble d'amortissement des vibrations de torsion selon la revendication 14, **caractérisé en ce que** l'agencement d'étanchéité (102) comprend un corps d'étanchéité (104) avec un élément de corps d'étanchéité (130) retenu de manière solidaire en rotation par rapport à l'autre module et un élément de corps d'étanchéité (132) coopérant de manière étanche en liaison avec ledit premier module.

16. Ensemble d'amortissement des vibrations de torsion selon l'une quelconque des revendications 1 à 15, **caractérisé en ce que** l'agencement d'accouplement (20) et l'agencement de déphasage (18) sont encapsulés l'un à l'autre de manière essentiellement étanche aux lubrifiants par l'agencement d'étanchéité (102).

17. Ensemble d'amortissement des vibrations de torsion selon l'une quelconque des revendications précédentes, **caractérisé en ce que** l'agencement d'étanchéité (102) comprend une première formation d'étanchéité (154) pour la fermeture essentiellement étanche aux fluides d'une région d'engagement de denture du premier agencement de roue d'accouplement (86) avec les satellites (72) et/ou une deuxième formation d'étanchéité (156) pour la fermeture essentiellement étanche aux fluides d'une région d'engagement de denture du deuxième agencement d'accouplement (88) avec les satellites (72).

18. Ensemble d'amortissement des vibrations de torsion selon la revendication 17, **caractérisé en ce que** la première formation d'étanchéité (154) avec le premier agencement de roue d'accouplement (86) et/ou la deuxième formation d'étanchéité (156) avec le deuxième agencement de roue d'accouplement (88) fournissent une rigole de lubrifiant (162, 168).

19. Ensemble d'amortissement des vibrations de torsion selon la revendication 18, **caractérisé en ce que** la première formation d'étanchéité (154) et/ou la deuxième formation d'étanchéité (156) comprennent chacune au niveau de l'agencement de roue d'accouplement associé (86, 88) des éléments de limitation de rigole (158, 160, 164, 166) retenus de manière solidaire en rotation de chaque côté de la région d'engagement de denture.

20. Ensemble d'amortissement des vibrations de torsion selon la revendication 6, 14, 15 ou 19, **caractérisé en ce que** la fixation solidaire en rotation est réalisée par
- au moins un organe de fixation, de préférence un boulon fileté ou un rivet,
et/ou
- un matage
et/ou
- un engagement par liaison de matière, de préférence un soudage ou un brasage.
